(19) Europäisches Patentamt
European Patent Office
Office européen des brevets

(11) EP 0 641 841 B1

(12) **EUROPÄISCHE PATENTSCHRIFT**

(45) Veröffentlichungstag und Bekanntmachung des Hinweises auf die Patenterteilung:
**10.11.1999 Patentblatt 1999/45**

(51) Int Cl.[6]: **C09B 62/25**, C09B 62/41, D06P 1/382

(21) Anmeldenummer: **94112969.4**

(22) Anmeldetag: **19.08.1994**

(54) **Azo-Reaktivfarbstoffe**

Reactive azo dye-stuffs

Colorants azoiques réactifs

(84) Benannte Vertragsstaaten:
**CH DE FR GB LI**

(30) Priorität: **01.09.1993 DE 4329420**

(43) Veröffentlichungstag der Anmeldung:
**08.03.1995 Patentblatt 1995/10**

(73) Patentinhaber: **BAYER AG**
**51368 Leverkusen (DE)**

(72) Erfinder:
- **Jäger, Horst, Dr.**
**D-51375 Leverkusen (DE)**
- **Wolff, Joachim, Dr.**
**D-51519 Odenthal (DE)**

(56) Entgegenhaltungen:
**GB-A- 1 508 461**
**US-A- 4 988 802**
**US-A- 5 200 511**
**US-A- 5 223 607**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 641 841 B1

## Beschreibung

Die Erfindung betrifft neue Azo-Reaktivfarbstoffe, ein Verfahren zu ihrer Herstellung sowie ihre Verwendung zum Färben von hydroxy- bzw. amidgruppenhaltigen Fasermaterialien.

Bisazofarbstoffe sind bereits aus JP-A 60069163, US-A-4 988 802, US-A-5 223 607 und US-A-5 200 511 bekannt, weisen aber noch gewisse Nachteile auf.

Gegenstand der Erfindung sind Azo-Reaktivfarbstoffe, die der allgemeinen Formel (1) entsprechen

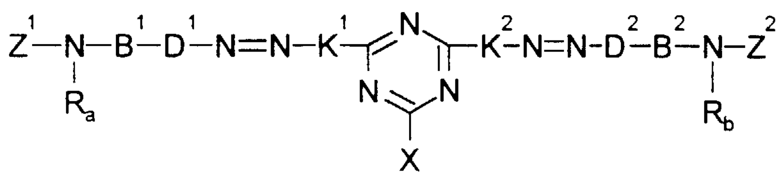

(1),

worin

$K^1$ und $K^2$ Kupplungskomponenten bedeuten, die gleich oder verschieden sind,

$D^1$ und $D^2$ unabhängig voneinander für einen gegebenenfalls substituierten Benzol- oder Naphthalinrest stehen, wobei beispielsweise $C_1$-$C_4$-Alkoxy, Cl, $SO_3H$, COOH oder $NO_2$ mögliche Substituenten darstellen,

$R_a$ und $R_b$ unabhängig voneinander Wasserstoff oder gegebenenfalls substituiertes $C_1$-$C_4$-Alkyl bedeuten,

$B^1$ und $B^2$ unabhängig voneinander für eine direkte Bindung oder ein Brückenglied stehen,

$Z^1$ und $Z^2$ unabhängig voneinander für eine Pyrimidinreaktivgruppe mit Chlor oder Fluor als Abgangsgruppe, oder für 2,3-Dichlorchinoxalin-6-carboxyl stehen,

X für $SR^1$, $OR^2$ oder für

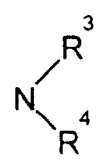

steht, worin

$R^1$ gegebenenfalls substituiertes $C_1$-$C_4$-Alkyl, gegebenenfalls substituiertes Phenyl, Naphthyl oder 2-Benzthiazolyl bedeutet,

$R^2$ für Wasserstoff, gegebenenfalls substituiertes $C_1$-$C_4$-Alkyl oder gegebenenfalls substituiertes Phenyl oder Naphthyl steht,

$R^3$ für Wasserstoff oder einen gegebenenfalls substituierten aliphatischen, cycloaliphatischen, heterocyclischen oder araliphatischen Rest steht und

$R^4$ für Wasserstoff oder einen gegebenenfalls substituierten aliphatischen, cycloaliphatischen, heterocyclischen, araliphatischen oder aromatischen Rest steht oder worin $R^3$ und $R^4$, gegebenenfalls unter Einschluß eines weiteren Heteroatoms, einen 5- oder 6-gliedrigen Ring bilden können.

Bevorzugte Kupplungskomponenten $K^1$ und $K^2$ sind unabhängig voneinander solche, die Acetessigsäurearylide, Pyrazolone, Pyridone oder Aminonaphthole bedeuten, insbesondere solche der Formeln (2) bis (5)

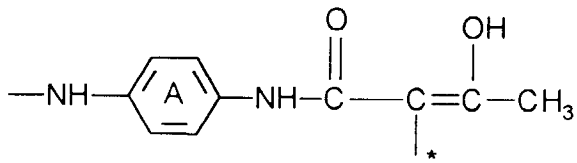

(2)

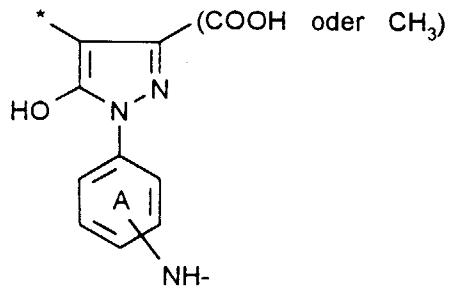

(3)

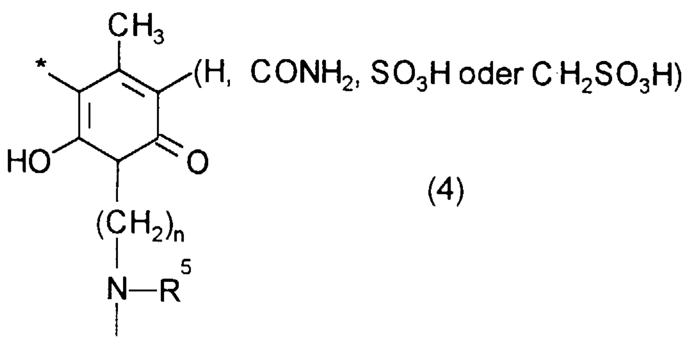

(4)

oder

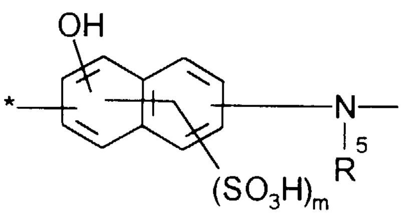

(5),

worin der Benzolrest A durch weitere Substituenten vorzugsweise aus der Reihe Carboxy, Sulfo, Chlor oder $C_1$-$C_4$-Alkoxy substituiert sein kann,

n für eine ganze Zahl von 2 bis 6,

m für 1 oder 2 und

$R^5$ für Wasserstoff, Methyl oder Ethyl steht,

wobei die bivalenten Reste der Formeln (2) bis (5) über ihre Aminogruppe mit dem Triazinylrest und über die mit * gekennzeichnete Bindung mit der Azo-Gruppe der Formel (1) verknüpft sind.

Die Hydroxygruppe der Formel (5) steht vorzugsweise ortho zu der über die mit * markierte Bindung verknüpften Azo-Gruppe.

In einer weiteren bevorzugten Ausführungsform bedeuten $B^1$ und $B^2$ unabhängig voneinander eine direkte Bindung oder eine $C_1$-$C_4$-Alkylenbrücke, insbesondere $-CH_2-$, $-CH_2-CH_2-$ oder eine Arylenbrücke, insbesondere 1,3- und 1,4-Phenylen oder Arylsulfonylaminobrücke, insbesondere solche der Formel

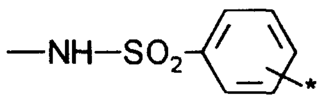

Arylcarbonylaminobrücke, insbesondere solche der Formel

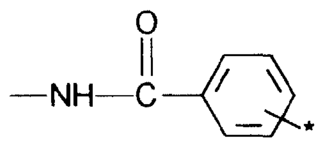

Alkylencarbonylaminobrücke, insbesondere solche der Formel

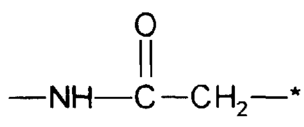 ,

wobei die mit * markierte Bindung die

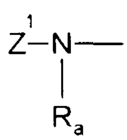 bzw. die 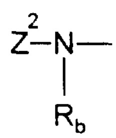

Verknüpfung kennzeichnet

Bevorzugte Reaktivgruppen $Z^1$ bzw. $Z^2$ entsprechen unabhängig voneinander der Formel (6)

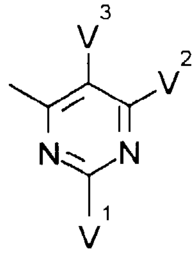 (6) ,

worin

$V^3$ für H, $CH_3$, F, Cl, Br, $NO_2$, CN, $CONH_2$, $SO_2NH_2$, $CH_3SO_2$, COOH, $COOCH_3$ oder $COOC_2H_5$,

$V^2$ und $V^1$ unabhängig voneinander für H, $CH_3$, F, Cl oder $CH_3SO_2$ stehen,

mit der Maßgabe, daß mindestens einer der Reste $V^1$ oder $V^2$ F oder Cl bedeutet.

Beispiele für mögliche Substituenten der $C_1$-$C_4$-Alkylreste in der Bedeutung von $R^1$ bzw. $R^2$ sind:

OH, COOH, $SO_3H$, $OSO_3H$.

Beispiele für mögliche Substituenten der Phenyl-, Naphthyl- bzw. 2-Benzthiazolylreste in der Bedeutung von $R^1$ bzw. $R^2$ sind:

$CH_3$, $CH_3O$, Cl, COOH, $SO_3H$ oder $NO_2$.

Die aliphatischen Reste in der Bedeutung von $R^3$ und $R^4$ sind vorzugsweise Alkylreste, insbesondere mit 1 bis 6 C-Atomen, die gegebenenfalls durch Heteroatome unterbrochen und die gegebenenfalls substituiert sind, wobei unterbrechende Heteroatome, beispielsweise O, S, $SO_2$, $NR^5$ ($R^5$ = Wasserstoff, $C_1$-$C_4$-Alkyl), $NR^5CO$ oder $NR^5SO_2$ sind und mögliche Substituenten beispielsweise OH, Cl, F, COOH, $SO_3H$, $OSO_3H$, $SO_2CH{=}CH_2$, CN, $SO_2CH_2CH_2Cl$ oder $SO_2CH_2CH_2OSO_3H$ sind.

Die cycloaliphatischen Reste in der Bedeutung von $R^3$ bzw. $R^4$ sind vorzugsweise 5- oder 6-gliedrige Cycloalkylreste.

Die heterocyclischen Reste in der Bedeutung von $R^3$ und $R^4$ sind vorzugsweise 5- oder 6-gliedrige Cycloalkylringe, die durch Heteroatome, insbesondere $SO_2$, O oder N unterbrochen sind.

Die araliphatischen Reste in der Bedeutung von $R^3$ bzw. $R^4$ sind beispielsweise solche der Formel

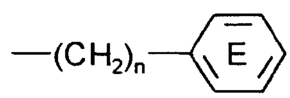 ,

wobei n eine ganze Zahl von 1 bis 4 ist und der Rest E substituiert sein kann, beispielsweise durch Cl, $NO_2$, COOH, $SO_3H$, $CH_3$, $OCH_3$, $SO_2CH_2CH_2OSO_3H$, $SO_2CH{=}CH_2$ oder $CH_2SO_2CH_2CH_2OSO_3H$.

Aromatische Reste in der Bedeutung von $R^4$ sind vorzugsweise Phenyl- oder Naphthylreste, die gegebenenfalls substituiert sind, beispielsweise mit $OCH_3$, $OC_2H_5$, $OCH_2CH_2OH$, $CH_3$, $C_2H_5$, $-CH(CH_3)_2$, F, Cl, Br, COOH, $SO_3H$, $NO_2$, $SO_2CH_2CH_2OSO_3H$, $SO_2CH{=}CH_2$, $CH_2SO_2CH_2CH_2OSO_3H$ oder $CH_2SO_2CH{=}CH_2$.

Heteroatome zur Ringbildung von $R^3$ und $R^4$ sind bevorzugt O, NH, $NCH_3$, $NCOCH_3$, N-$C_2H_4SO_2CH{=}CH_2$, S, SO oder $SO_2$.

Im einzelnen sind für die in der Formel (1) aufgeführten allgemeinen Bezeichnungen $-K^1-$, $-K^2-$,

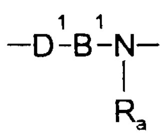 bzw. 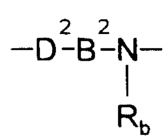

-X und $-Z^1$ bzw.

$-Z^2$ besonders bevorzugte Ausführungsformen im folgenden beispielhaft angegeben.

Die Kupplungskomponenten $-K^1-$ bzw. $-K^2-$ bedeuten unabhängig voneinander z.B.:

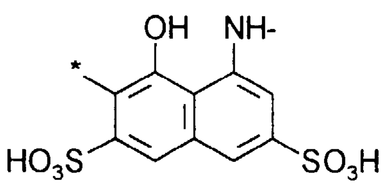

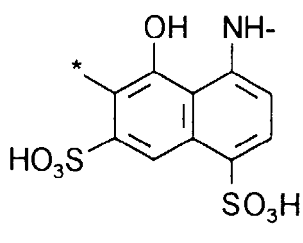

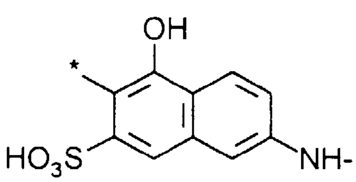

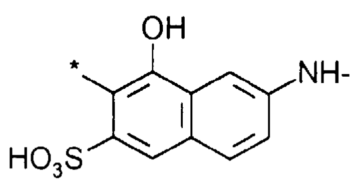

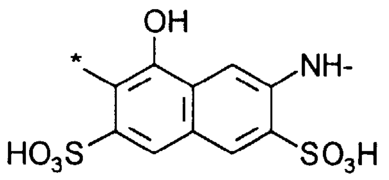

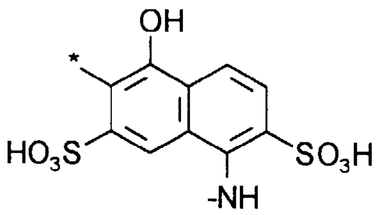

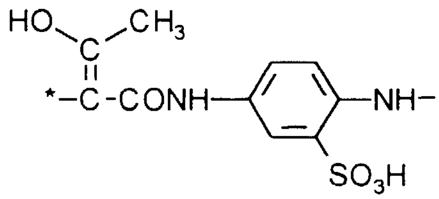

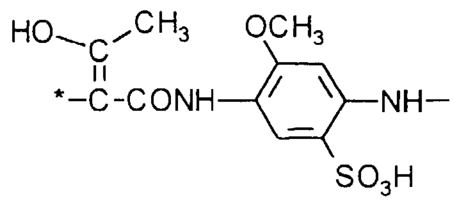

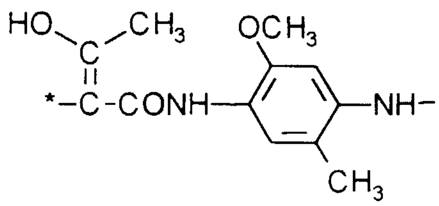

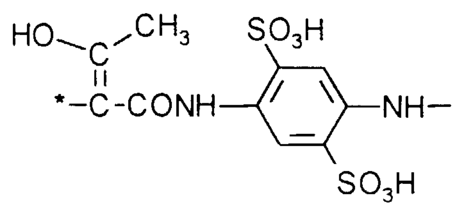

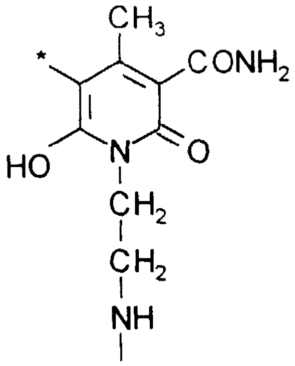

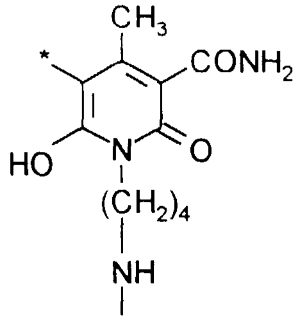

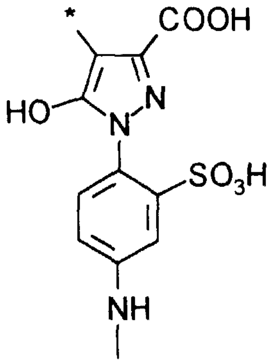

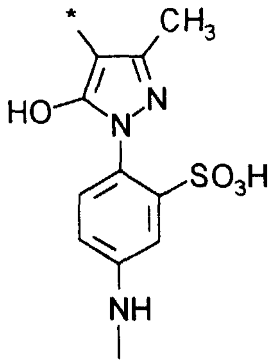

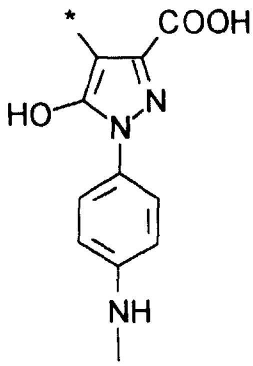

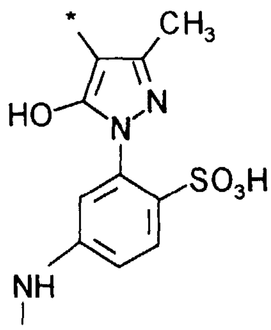

wobei die aufgeführten Beispiele mit der Azogruppe über die mit * markierte Bindung verknüpft sind.

Die Reste

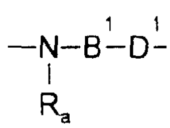

bzw.

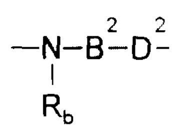

bedeuten unabhängig voneinander z.B.

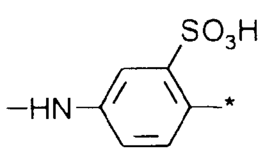

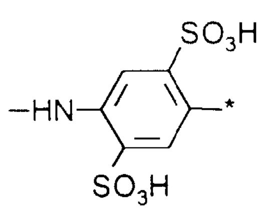

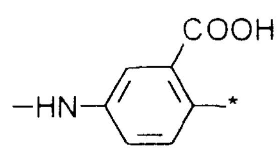

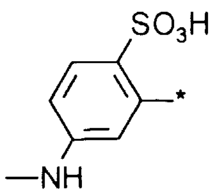
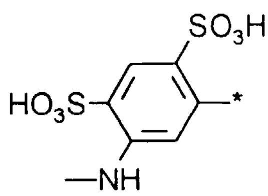
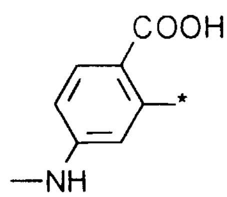

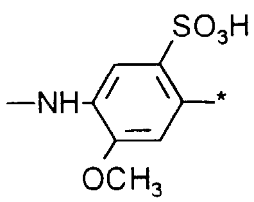
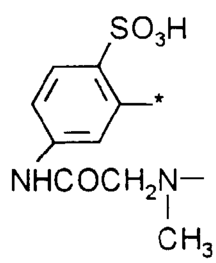
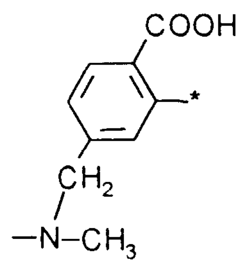

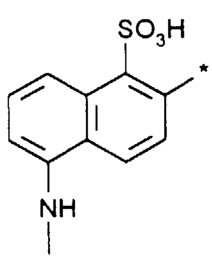
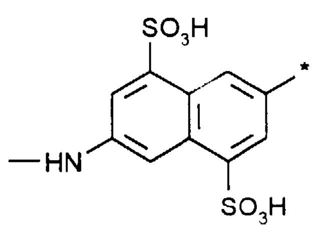
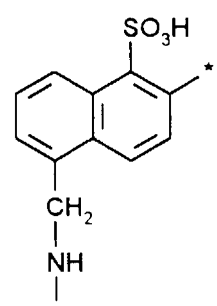

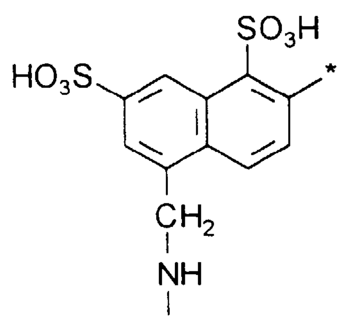,

wobei die aufgeführten Beispiele mit der Azogruppe über die mit * markierten Bindungen verknüpft sind.

Der Rest -X am Triazin mit der Bedeutung $-SR^1$ bedeutet insbesondere $-S-CH_2CH_2OH$, $SCH_2COOH$,

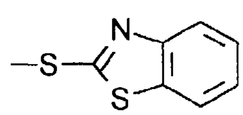

oder

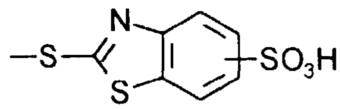

Der Rest -X am Triazin mit der Bedeutung -$OR^2$ bedeutet insbesondere -OH, -$OCH_3$, -$OC_2H_5$, -$OCH(CH_3)_2$, -$OCH_2CH_2OCH_3$,

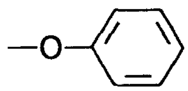 , 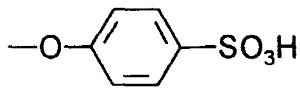 , 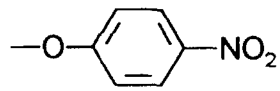

oder

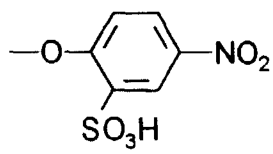

Der Rest -X am Triazin mit der Bedeutung

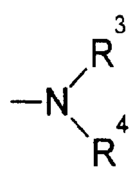

bedeutet insbesondere
-$NH_2$, -$NHCH_3$, -$N(CH_3)_2$, -$NHC_2H_5$, -$N(C_2H_5)_2$,
-$NHCH_2CH_2OH$, -$NHCH_2CH_2OSO_3H$,
-$NHCH_2CH_2SO_3H$, -$NHCH_2COOH$,

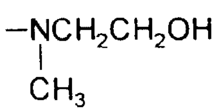 , 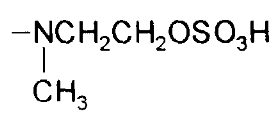 , 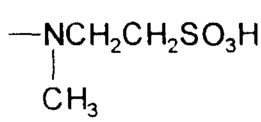 ,

-$N(CH_2CH_2OH)_2$,

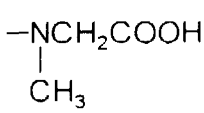 , 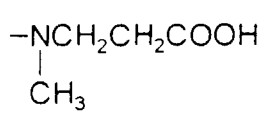 , 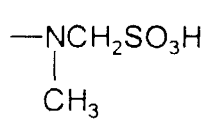 , 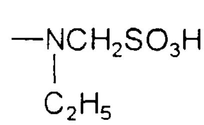 ,

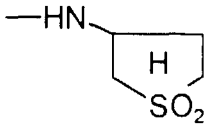 , 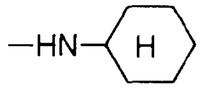 , 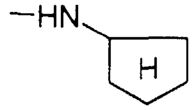 ,

$-NHCH_2CH_2CH_2SO_2CH_2CH_2OSO_3H$, $-NHCH,CH_2SO_2CH_2CH_2OSO_3H$,

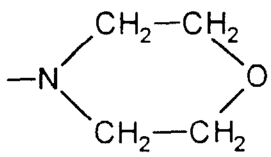 , 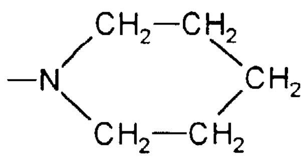 , 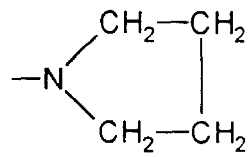 ,

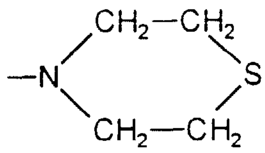 , 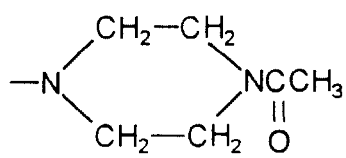 , 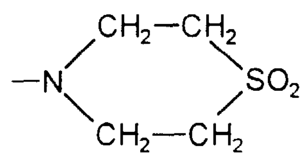 ,

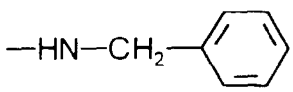 , 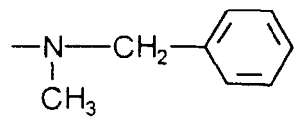 , 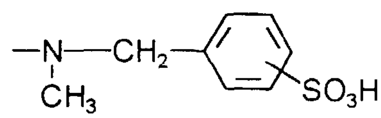 ,

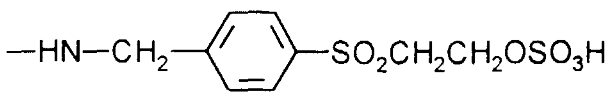 , 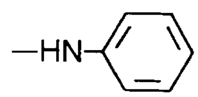 ,

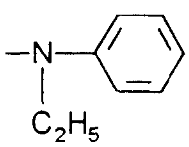 , 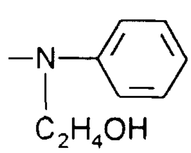 , 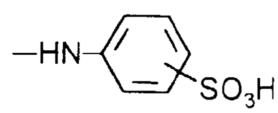

oder

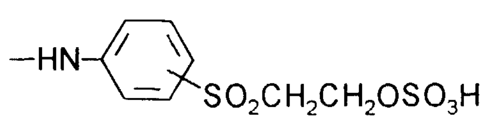 .

Die Reaktivgruppen $Z^1$ und $Z^2$ bedeuten unabhängig voneinander z.B.: Mono-, Di- oder Trihalogenpyrimidinylreste, wie bei 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano-pyrimidinyl-6-Rest, sowie die entsprechenden Fluor-Derivate der oben erwähnten chlorsubstituierten heterocyclischen Reste, unter diesen beispielsweise der 2-Fluor-4-pyrimidinyl-,

2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 2,6-Difluor-5-brom-4-pyrimidinyl-, 2-Fluor-5-brom-6-methyl-4-pyrimidinyl-, 2-Fluor-5-nitro-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 2-Fluor-5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-chlorpyrimidin-4-yl; 2-Methyl-4-fluor-5-methylsulfonylpyrimidinyl-6; 2,6-Difluor-5-methyl-sulfonyl-4-pyrimidinyl-, 2,6-Dichlor-5-methylsulfonyl-4-pyrimidinyl-, 2-Fluor-5-sulfonamido-4-pyrimidinyl-, 6-Fluor-5-chlor-4-pyrimidinyl, 2-Methyl-6-fluor-5-chlor-4-pyrimidinyl-, 2,3-Dichlorchinoxalin-6-carbonyl-Rest.

Besonders bevorzugt sind Farbstoffe der Formel (1), worin
$K^1$ und $K^2$ unabhängig voneinander für

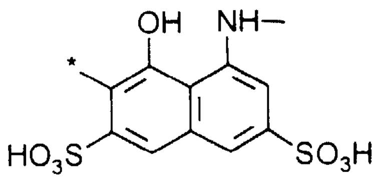

oder

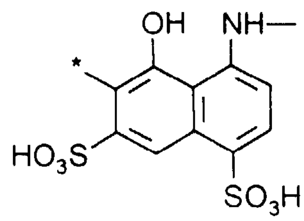

stehen, wobei $K^1$ bzw. $K^2$ mit der Azogruppe über die mit * markierte Bindung verknüpft sind und/oder

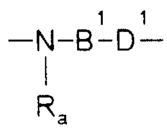

gleich

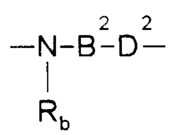

sind und für

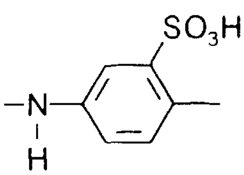

,

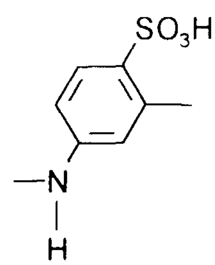

,

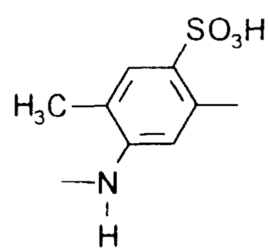

,

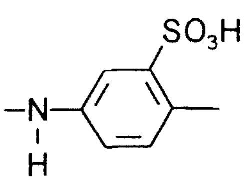

,

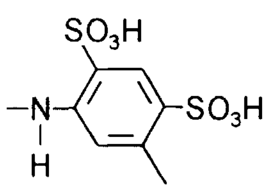

,

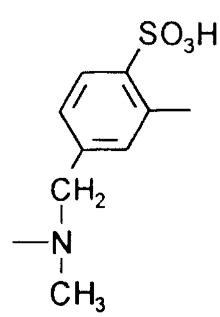

,

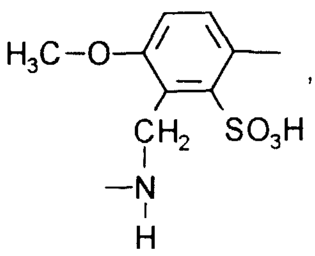,
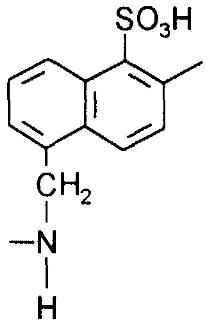
oder
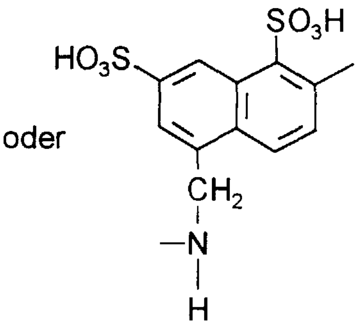

stehen.

Ganz besondere bevorzugt sind Farbstoffe der Formel (1), worin $K^1$ und $K^2$ jeweils für

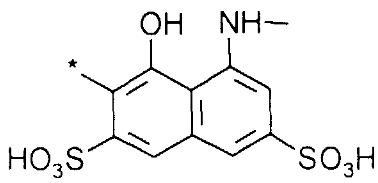
oder
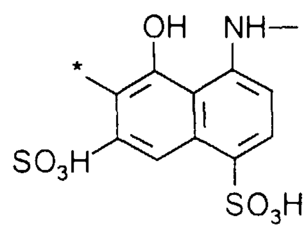

steht, wobei $K^1$ bzw. $K^2$ mit der Azogruppe über die mit * markierte Bindung verknüpft ist und

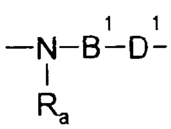
und
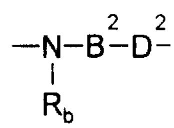

jeweils

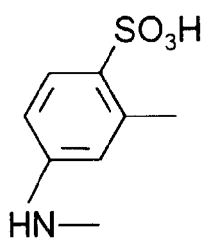

bedeuten und

$Z^1$ und $Z^2$ unabhängig voneinander für

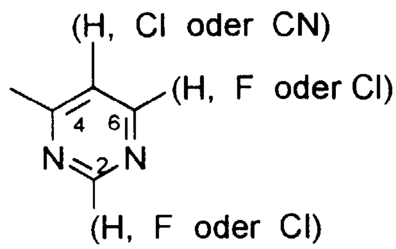

stehen, mit der Maßgabe, daß mindestens einer der Substituenten in 2- oder 6-Stellung für F oder Cl steht, wobei $Z^1$ und $Z^2$ vorzugsweise identisch sind und insbesondere für

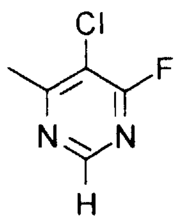

oder

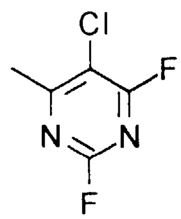

stehen, und

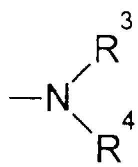

für $NH_2$ steht
oder den Rest einer aliphatischen Aminogruppe bedeutet, vorzugsweise einer aliphatischen Aminogruppe, in der $R^3$ H, $CH_3$ oder $C_2H_5$ und $R^4$ eine durch COOH, $SO_3H$ oder $OSO_3H$ substituierte $C_1$-$C_4$-Alkylgruppe bedeuten, insbesondere für

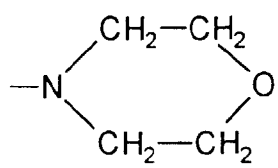

steht.
In einer weiteren bevorzugten Ausführungsform ist

$K^1 = K^2$
$D^1 = D^2$
$B^1 = B^2$
$Z^1 = Z^2$ und
$R_a = R_b$.

Die Erfindung betrifft weiterhin ein Verfahren zur Herstellung von Farbstoffen der Formel (1), dadurch gekennzeichnet, daß man

a) zwei Mol-Äquivalente eines Amins oder je ein Mol-Äquivalent zweier unterschiedlicher Amine, die der allgemeinen Formel (7a) und/oder (7b) entsprechen,

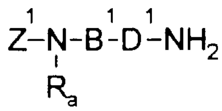

(7a)

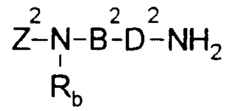

(7b)

in denen $Z^1$, $R_a$, $B^1$ und $D^1$ bzw. $Z^2$, $R_b$, $B^2$ und $D^2$ die angegebene Bedeutung haben, diazotiert und mit einem Mol-Äquivalent einer Kupplungskomponente der Formel (8)

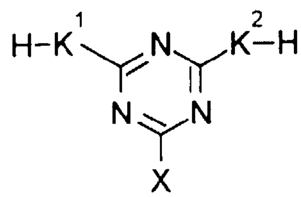

(8)

in der $K^1$, $K^2$ und X die angegebene Bedeutung haben, umsetzt,
oder

b) ein Mol-Äquivalent eines Azofarbstoffs der Formel

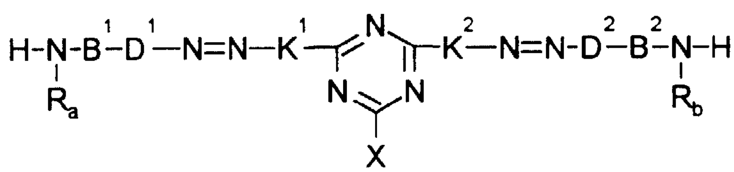

(9),

in dem $R_a$, $R_b$, $B^1$, $B^2$, $D^1$, $D^2$, $K^1$, X und $K^2$ die angegebene Bedeutung haben,
mit zwei Mol-Äquivalenten einer Reaktivkomponente der Formel

$Z^1$-F oder -Cl

oder $Z^2$-F oder -Cl (10)

oder mit je einem Mol-Äquivalent einer unterschiedlichen Reaktivkomponente

$Z^1$-F oder -Cl und $Z^2$-F oder -Cl

worin $Z^1$ und $Z^2$ die angegebene Bedeutung hat,
unter Abspaltung von HF und/oder HCl kondensiert.

Die Amine der Formel (7a) bzw. (7b) erhält man durch Acylieren von Aminen der Formel (11a) bzw. (11b)

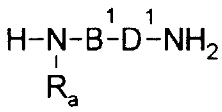 bzw. 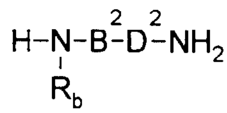

(11a) (11b)

mit den Reaktivkomponenten der Formel (10).

Die Amine der Formel (11a) bzw. (11b) sind bekannt.

Beispiele sind die durch ein H-Atom und eine $NH_2$-Gruppe ergänzten Reste

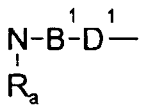 bzw. 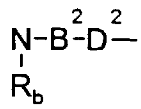 ;

die oben aufgeführt sind.

Beispiele für Reaktivkomponenten (10) sind die Fluor- bzw. Chlor-Verbindungen der oben aufgeführten Reaktivgruppen $Z^1$ bzw. $Z^2$.

Die Herstellung der Kupplungskomponenten der Formel (8) ist beschrieben in der US-A-5 223 607, DE-A 27 48 929 und DE-A 27 48 966.

Die Reaktionsbedingungen der Herstellung entsprechen den auf dem Gebiet der Acylierung, Diazotierung und Kupplung üblichen Bedingungen. So erfolgt die Herstellung der erfindungsgemäßen Farbstoffe und Farbstoffzwischenprodukte vorzugsweise im wäßrigen Medium. Die Kondensation mit den Reaktivkomponenten (10) wird bei 0 bis 90°C - je nach Reaktivität der Reaktivkomponenten ausgeführt - wobei die bei der Kondensation freiwerdende Salzsäure oder Flußsäure durch Zugabe von basischen Substanzen neutralisiert wird.

Diese können sowohl in fester wie auch gelöster Form zugesetzt werden. Als Beispiel seien genannt: LiOH, $Li_2CO_3$, NaOH, $Na_2CO_3$, $NaHCO_3$, KOH, $K_2CO_3$, MgO, $MgCO_3$, $Ca(OH)_2$, $CaCO_3$.

Die Reaktivfarbstoffe der Formel (1) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoffe können gegebenenfalls nach Zugabe eines Puffer-Gemisches, beispielsweise Mono- und Dinatriumphosphat, getrocknet werden; vorzugsweise wird die Trocknung bei nicht zu hohen Temperaturen und unter vermindertem Druck vorgenommen. Durch Zerstäubungstrocknung des gesamten Herstellungsgemisches kann man in gewissen Fällen die erfindungsgemäßen trockenen Präparate direkt, d.h. ohne Zwischenisolierung der Farbstoffe herstellen.

Die Reaktivfarbstoffe der Formel (1) färben hydroxyl- und amidgruppenhaltiges Fasermaterial, insbesondere Baumwolle, in brillanten Nuancen. Die Farbstoffe zeigen ein hervorragendes Aufziehvermögen und liefern hohe Fixierausbeuten. Das Echtheitsniveau der Färbungen ist ausgezeichnet. Die Färbungen sind ätzbar.

Die angegebenen Formeln sind die der freien Säuren.

Im allgemeinen erhält man bei der Synthese Salze, auf die sich die vorliegende Erfindung ebenfalls bezieht, im allgemeinen die Alkalisalze, insbesondere die Na-, K- oder Li-Salze und verwendet die Farbstoffe auch in dieser Form zum Färben.

**Beispiel 1**

Eine neutrale Lösung von 0,5 mol 1-Amino-8-hydroxy-naphthalin-3,6-disulfonsäure (H-Säure) in 400 ml Wasser läßt man in ca. 1 Stunde in eine gut gerührte Vorlage aus 95 g Cyanurchlorid und 50 ml Wasser bei 10° einlaufen. Man rührt ca. 3 Stunden nach, wobei die H-Säure in Lösung geht, wodurch die Vollständigkeit der Acylierung angezeigt wird. Zu dieser Lösung gibt man eine neutrale Lösung von 0,47 mol H-Säure, stellt den pH durch Einstreuen von Natriumhydrogencarbonat auf 4,5 und erwärmt auf 30°. Man rührt dann 4 Stunden bei 30° und pH 4,5, den man durch Zugabe von Natriumhydrogencarbonat einhält. Das Biskondensationsprodukt fällt zum Teil aus und der Ansatz muß mit ca. 1 l Wasser verdünnt werden. Wenn sich keine überschüssige H-Säure mehr nachweisen läßt, stellt man die Reaktionsmischung auf pH 7, gibt 450 g einer wäßrigen Lösung hinzu, die 1,1 mol Methyltaurin als Natriumsalz enthält. Man erwärmt 5 Stunden auf 80°. Der Austausch des dritten Chloratoms ist dann beendet. Zur Isolierung wird der pH auf 6,0 bis 6,5 zurückgestellt und die Lösung mit Kaliumchlorid gesättigt. Nach Abkühlen auf Raumtemperatur wird abgesaugt. Die Paste kann in dieser Form weiter verwendet werden. Die Gehaltsbestimmung erfolgt durch C, H, N,

S-Analyse einer getrockneten Probe.

Die Verbindung entspricht der Formel

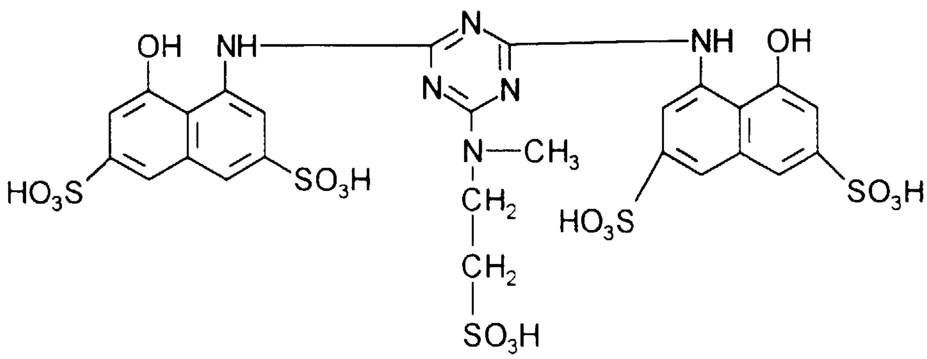

## Beispiel 2

Nach den Angaben von Beispiel 1 wird das Biskondensationsprodukt aus 1 mol Cyanurchlorid und 2 mol H-Säure hergestellt.

Anstelle von 1,1 mol Methyltaurinlösung wurden 95 g Morpholin zugesetzt und solange auf 80°C erwärmt bis der Austausch des dritten Chloratoms erfolgt ist, was ca. 4 Stunden benötigt. Zur Isolierung wird der pH auf 6 gestellt und die klare Lösung mit 20 Vol.-% Kaliumchlorid versetzt. Das ausgefallene Kondensationsprodukt wird bei Raumtemperatur abgesaugt und getrocknet. Die Gehaltsbestimmung erfolgt durch C, H, N, S-Analyse. Das $^1H$-NMR-Spektrum ist in Übereinstimmung mit der folgenden Struktur:

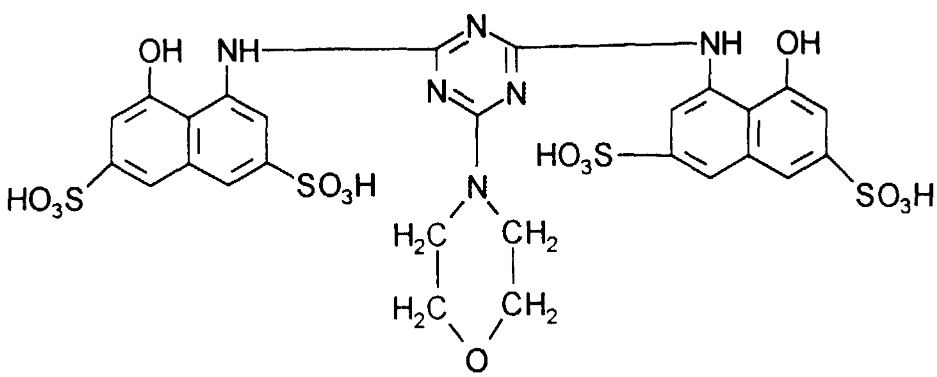

## Beispiel 3

Verfährt man nach den Angaben des vorhergehenden Beispiels und verwendet aber anstelle von 1-Amino-8-hydroxynaphthalin-3,6-disulfonsäure die gleiche Menge 1-Amino-8-hydroxynaphthalin-3,5-disulfonsäure, so erhält man die nachfolgend aufgeführte zweifach ankuppelbare Kupplungskomponente

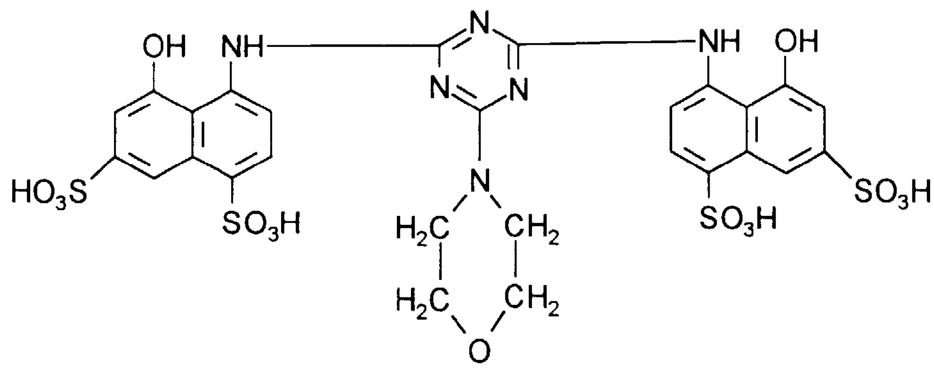

## Beispiel 4

Eine Suspension von 97 g Cyanurchlorid in 2,5 l Wasser wird mit der neutralen Lösung von 0,5 mol 1-Amino-4-N-acetoacetylamino-5-methoxy-benzol-2-sulfonsäure bei 10° versetzt und solange bei 10° und pH 5,0 bis 5,5 gerührt bis die Aminogruppe acyliert ist. Darauf wird eine neutrale Lösung von 0,47 mol 1-Amino-4-N-acetoacetylamino-5-methoxy-benzol-2-sulfonsäure zugegeben und die Temperatur auf 40° erhöht und solange bei pH 5,0 bis 5,5 kondensiert bis die Acylierung beendet ist.

Das Reaktionsgemisch des Monochlorkondensationsproduktes wird dann auf pH 7 gestellt und mit 450 g einer wäßrigen Lösung versetzt, die 1,1 mol N-Methyltaurin als Natriumsalz enthält. Man erwärmt dann solange auf 80 bis 85° bis der Austausch des dritten Chloratoms beendet ist. Das Reaktionsprodukt wird ausgesalzen und bei pH 5 und Raumtemperatur isoliert.

Die Paste kann in dieser Form für die nachfolgende Kupplungsreaktion verwendet werden.

Die Kupplungskomponente entspricht der Formel

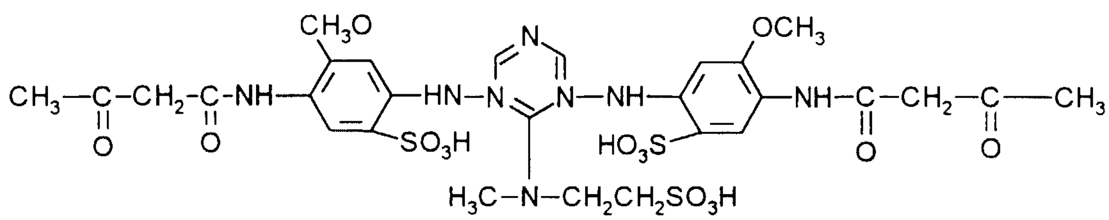

## Beispiel 5

Wenn man nach den Angaben von Beispiel 4 das Monochlorkondensationsprodukt herstellt und dann anstelle von N-Methyltaurin 0,5 mol m-Sulfanilsäure zusetzt und bei pH 6,5 mehrere Stunden auf 100° erwärmt, bis der Austausch des dritten Chloratoms beendet ist, so erhält man nach Isolierung durch Aussalzen eine zweifach kuppelbare Kupplungskomponente der folgenden Struktur

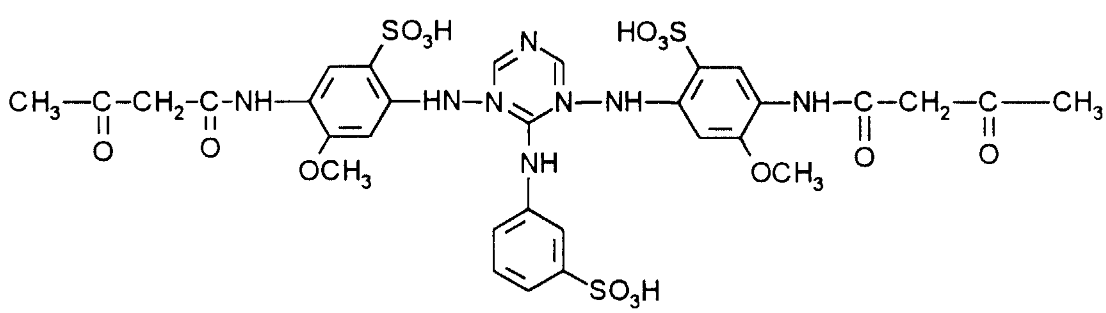

**Beispiel 6**

Eine Suspension von 97 g Cyanurchlorid in 2,5 l Wasser von 10°C wird mit einer neutralen Lösung von 149 1-(4-Amino-2-sulfophenyl)-pyrazolon-(5)-3-carbonsäure in 750 ml Wasser versetzt und solange bei 10°C und pH 5,0 bis 5,5 kondensiert bis die Acylierung vollständig ist. Zu diesem Reaktionsgemisch wird dann eine neutrale Lösung von 145 g 1-(4-Amino-2-sulfophenyl)-pyrazolon-(5)-3-carbonsäure zugegeben. Man erwärmt auf 35 bis 40°C und hält den pH im Bereich von 5,0 bis 5,5 durch Einstreuen von Natriumhydrogencarbonat. Wenn die Kondensation beendet ist, stellt man den pH auf 7 und setzt 95 g Morpholin zu. Man erwärmt ca. 4 Stunden auf 85°C. Nach Austausch des dritten Chloratoms stellt man den pH auf 4 bis 5 und salzt aus. Das Reaktionsprodukt wird bei Raumtemperatur abgesaugt. Es kann in Form der feuchten Paste weiter verwendet werden. Die Verbindung entspricht der Formel

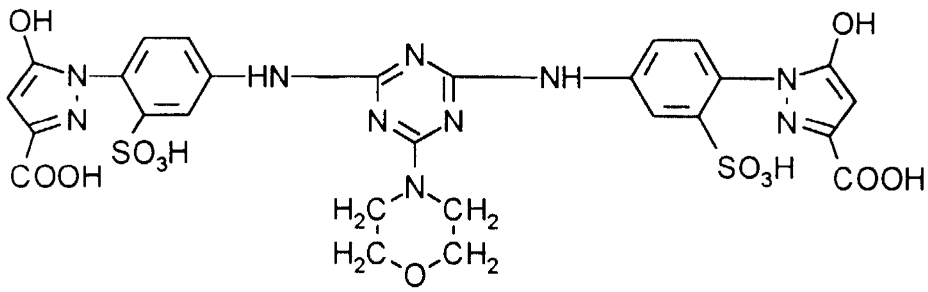

Weitere wertvolle zweifach ankuppelbare Kupplungskomponenten erhält man, wenn man nach den Angaben der Beispiele 1 bis 6 verfährt und für die Kondensation mit Cyanurchlorid die in Spalte 2 der nachfolgenden Tabelle aufgeführten Kupplungskomponenten, für die Kondensation mit dem Dichlorkondensationsprodukt die in Spalte 3 der nachfolgenden Tabelle genannten Kupplungskomponenten und für den Austausch des dritten Chloratoms die in Spalte 4 aufgeführten Amine verwendet.

| Beispiel | Kupplungskomponente | Kupplungskomponente | Amin |
|---|---|---|---|
| 7 | 1-Amino-8-hydroxynaphthalin-3,6-disulfonsäure | 1-Amino-8-hydroxynaphthalin-4,6-disulfonsäure | Taurin |
| 8 | " | " | N-Methyltaurin |
| 9 | " | " | Morpholin |
| 10 | " | " | Diethylamin |
| 11 | " | 1-Amino-8-hydroxynaphthalin-3,6-disulfonsäure | Taurin |
| 12 | " | " | Ethanolamin |
| 13 | " | " | Diethylamin |
| 14 | " | " | Aminoessigsäure |
| 15 | " | " | ß-Aminopropionsäure |
| 16 | 1-Amino-8-hydroxynaphthalin-4,6-disulfonsäure | 1-Amino-8-hydroxynaphthalin-4,6-disulfonsäure | Taurin |
| 17 | " | " | N-Methyltaurin |
| 18 | " | " | -Methoxyethylamin |
| 19 | " | " | Methylaminomethylsulfonsäure |
| 20 | " | " | Aminoessigsäure |
| 21 | 1-Amino-8-hydroxynaphthalin-3,6-disulfonsäure | 2-Amino-5-hydroxynaphthalin-7-sulfonsäure | N-Methylamin |

(fortgesetzt)

| Beispiel | Kupplungskomponente | Kupplungskomponente | Amin |
|---|---|---|---|
| 22 | " | " | Taurin |
| 23 | " | " | Aminolsulfat |
| 24 | 2-Amino-5-hydroxynaphthalin-7 -sulfonsäure | 2-Amino-5-hydroxynaphthalin-7-sulfonsäure | N-Methyltaurin |
| 25 | 2-Amino-8-hydroxynaphthalin-3,6-disulfonsäure | 2-Amino-8-hydroxynaphthalin-3,6-disulfonsäure | |
| 26 | " | " | Morpholin |
| 27 | " | " | Taurin |
| 28 | 2-Amino-5-hydroxynaphthalin-1,7-disulfonsäure | 2-Amino-5-hydroxynaphthalin-1,7-disulfonsäure | Morpholin |
| 29 | " | " | N-Methyltaurin |
| 30 | 2-Amino-8-hydroxynaphthalin-8-sulfonsäure | 2-Amino-8-hydroxynaphthalin-8-sulfonsäure | " |
| 31 | 1-Amino-8-hydroxynaphthalin-3,6-disulfonsäure | 1-(4'-Amino-2'-sulfophenyl) pyrazolon-(5)-3-carbonsäure | Morpholin |
| 32 | " | " | N-Methyltaunn |
| 33 | " | 1-Acetoacetylamino-4-amino-2-methoxy-benzol-5-sulfonsäure | Morpholin |
| 34 | " | " | Taurin |
| 35 | " | 1-Acetoacetylamino-4-aminobenzol-5-sulfonsäure | Taurin |
| 36 | " | " | N-Methyltaurin |

**Beispiel 37**

0,1 mol 1-Amino-5-(5'-chlor-6'-fluor-pyrimidinylamino-4')-benzol-2-sulfonsäure werden in 500 ml Eiswasser angeschlämmt und mit 28 ml 30 %iger Salzsäure angesäuert. Diese Suspension wird tropfenweise mit 70 ml 10 %iger Natriumnitritlösung in einer halben Stunde versetzt und dann ca. eine Stunde nachgerührt. Der geringe Überschuß an Nitrit wird mit Amidosulfonsäure zerstört. Die Diazotierung wird dann in einer halben Stunde in eine Vorlage aus 0,05 mol binärer Kupplungskomponente des Beispiels 1 und 28 g Natriumhydrogencarbonat in 500 ml Wasser eingetragen. Man rührt bei 10 bis 15° bis die Kupplung beendet ist. Aus der klaren Lösung wird der Farbstoff durch Zugabe von 15 Vol.-% Kaliumchlorid abgeschieden. Nach dem Absaugen, Trocknen und Mahlen erhält man ein rotes Farbstoffpulver, das sich leicht in Wasser mit roter Farbe löst.

Der Farbstoff färbt Baumwolle nach einem der für Baumwollreaktivfarbstoffe üblichen Verfahren in einem klaren neutralen Rot (Farbkennzahl 8). In Form der freien Säure entspricht der Farbstoff der Formel

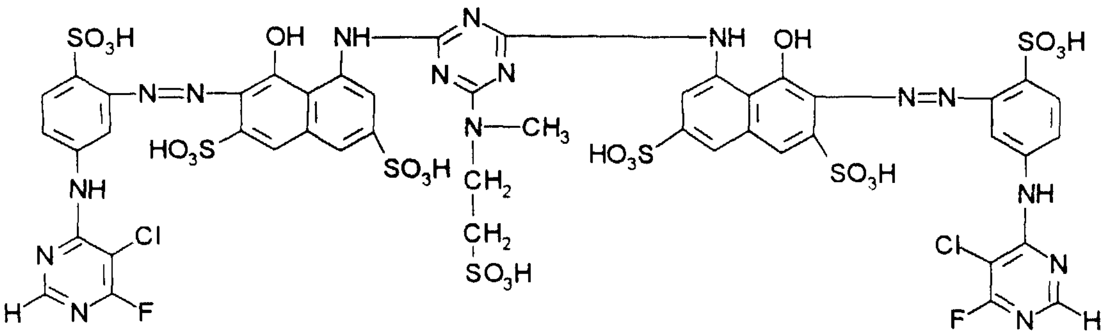

Weitere wertvolle Farbstofe, die Baumwolle in den in der vierten Spalte der nachfolgenden Tabelle angegebenen Farbton färben, erhält man nach den Angaben dieses Beispiels, wenn man die in der zweiten Spalte der nachfolgenden Tabelle aufgeführten Diazokomponenten mit den in der dritten Spalte genannten Kupplungskomponenten, die aus den Beispielen 1 bis 36 bekannt sind, vereinigt.

| Beispiel | Diazokomponente | Kupplungskomponente | Farbton | Farbkennzahl |
|---|---|---|---|---|
| 38 | 1-Amino-5-(5'-chlor-6'-fluor-pyrimidinylamino-4')benzol-2-sulfon-säure | 2 | rot | 8 |
| 39 | " | 3 | gelbstichig rot | 7 |
| 40 | " | 4 | " | 7 |
| 41 | " | 6 | " | |
| 42 | " | 8 | " | 7 |
| 43 | " | 10 | rot | 8 |
| 44 | " | 11 | " | 8 |
| 45 | " | 12 | " | 8 |
| 46 | " | 13 | " | 8 |
| 47 | " | 15 | gelbstichig rot | 7 |
| 48 | " | 16 | " | 7 |
| 49 | 1-Amino-5-(5'-chlor-6'-fluor-pyrimidinyl-amino-4')-benzol-2-sulfonsäure | 20 | rotstichig orange | 6 |
| 50 | " | 23 | gelbstichig orange | 4 |
| 51 | " | 27 | " | 4 |
| 52 | " | 24 | gelbstichig rot | 7 |
| 53 | " | 4 | gelb | 2 |
| 54 | " | 5 | " | 2 |
| 55 | " | 6 | " | 2 |
| 56 | 1-Amino-5-(5'-chlor-2',6'-difluor-pynmidinylamino-4')benzol-2-sulfonsäure | 1 | rot | 8 |
| 57 | " | 2 | " | 8 |
| 58 | " | 3 | gelbstichig rot | 7 |

(fortgesetzt)

| Beispiel | Diazokomponente | Kupplungskomponente | Farbton | Farbkennzahl |
|---|---|---|---|---|
| 59 | " | 16 | " | 7 |
| 60 | 1-Amino-4-(5'-chlor-2'-fluor-pyrimidinylamino-4'-)benzol-2-sulfonsäure | 1 | blaustichig rot | 9 |
| 61 | " | 2 | " | 9 |
| 62 | " | 3 | " | 9 |
| 63 | " | 16 | " | 9 |
| 64 | " | 4 | gelb | 2 |
| 65 | " | 6 | goldgelb | 3 |
| 66 | " | 31 | braun | 25 |
| 67 | " | 32 | " | 25 |
| 68 | " | 33 | " | 25 |
| 69 | 1-Amino-4-(5'-chlor-2',6-difluor-pyrimidinylamino-4')benzol-2-sulfonsäure | 1 | blaustichig rot | 9 |
| 70 | " | 16 | " | 9 |
| 71 | " | 4 | gelb | 2 |
| 72 | " | 6 | goldgelb | 3 |
| 73 | " | 31 | braun | 25 |
| 74 | " | 33 | " | 25 |
| 75 | 1-Amino-5-(2'-fluorpynmidinylamino-4')benzol-2-sulfonsäure | 1 | rot | 8 |
| 76 | " | 6 | goldgelb | 3 |
| 77 | 1-Amino-5-(5'-chlor-2'-fluor-pynmidinyl-amino-4')benzol-2,5-disulfonsäure | 2 | blaustichig rot | 9 |
| 78 | " | 4 | gelb | 2 |
| 79 | " | 6 | goldgelb | 3 |

**Patentansprüche**

**1.** Reaktivfarbstoffe, die der allgemeinen Formel (1) entsprechen

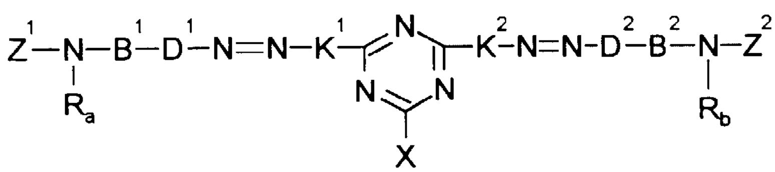

(1),

worin

$K^1$ und $K^2$ Kupplungskomponenten bedeuten, die gleich oder verschieden sind,

$D^1$ und $D^2$ unabhängig voneinander für einen gegebenenfalls substituierten Benzol- oder Naphthalinrest stehen,

$R_a$ und $R_b$ unabhängig voneinander Wasserstoff oder gegebenenfalls substituiertes $C_1$-$C_4$-Alkyl bedeuten,

$B^1$ und $B^2$ unabhängig voneinander für eine direkte Bindung oder ein Brückenglied stehen,

$Z^1$ und $Z^2$ unabhängig voneinander für eine Pyrimidinreaktivgruppe mit Chlor oder Fluor als Abgangsgruppe, oder für 2,3-Dichlorchinoxalin-6-carboxyl stehen,

X für $SR^1$, $OR^2$ oder für

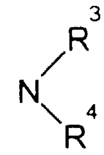

steht, worin

$R^1$ gegebenenfalls substituiertes $C_1$-$C_4$-Alkyl, gegebenenfalls substituiertes Phenyl, Naphthyl oder 2-Benzthiazolyl bedeutet,

$R^2$ für Wasserstoff, gegebenenfalls substituiertes $C_1$-$C_4$-Alkyl oder gegebenenfalls substituiertes Phenyl oder Naphthyl steht,

$R^3$ für Wasserstoff oder einen aliphatischen, cycloaliphatischen, heterocyclischen oder araliphatischen Rest steht und

$R^4$ die Bedeutung von $R^3$ besitzt oder für einen aromatischen Rest steht oder worin $R^3$ und $R^4$ gegebenenfalls unter Einschluß eines weiteren Heteroatoms einen 5- oder 6-gliedrigen Ring bilden.

**2.** Reaktivfarbstoffe gemäß Anspruch 1, dadurch gekennzeichnet, daß die Kupplungskomponenten $K^1$ und $K^2$ unabhängig voneinander Acetessigsäurearylide, Pyrazolone, Pyridone und Aminonaphthole bedeuten.

**3.** Reaktivfarbstoffe gemäß Anspruch 1, dadurch gekennzeichnet, daß die Kupplungskomponenten $K^1$ und $K^2$ unabhängig voneinander den Formeln (2) bis (5) entsprechen

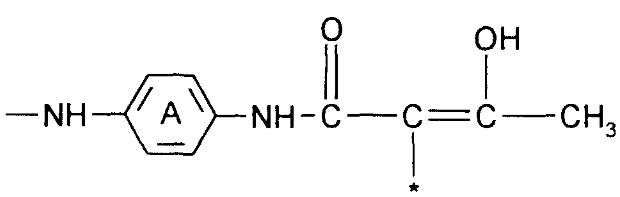

(2)

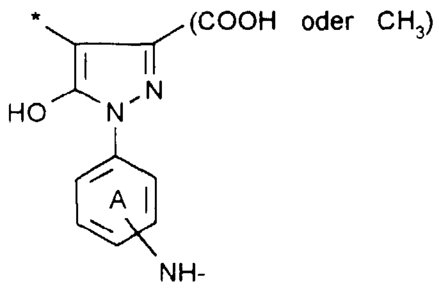

(3)

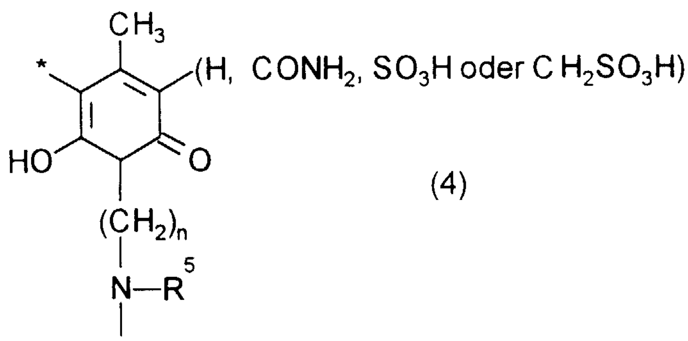

(4)

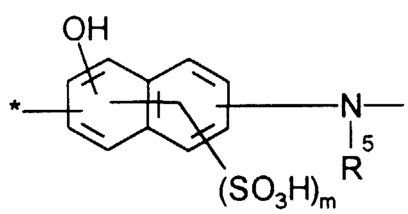

(5),

worin Benzolrest A gegebenenfalls durch weitere Substituenten substituiert ist,

n für eine ganze Zahl von 2 bis 6,
m für 1 oder 2 und
$R^5$ für Wasserstoff, Methyl oder Ethyl steht,

wobei die bivalenten Reste der Formeln (2) bis (5) über ihre Aminogruppe mit dem Triazinylrest und über die mit * gekennzeichnete Bindung mit der Azo-Gruppe der Formel (1) verknüpft sind.

**4.** Reaktivfarbstoffe gemäß Anspruch 1, dadurch gekennzeichnet, daß $B^1$ und $B^2$ unabhängig voneinander eine direkte Bindung, eine $C_1$-$C_4$-Alkylen-, Arylen-, Arylsulfonylamino-, Arylcarbonylamino- oder eine Alkylencarbonylaminobrücke bedeuten.

**5.** Reaktivfarbstoffe gemäß Anspruch 1, dadurch gekennzeichnet, daß $Z^1$ bzw. $Z^2$ unabhängig voneinander der Formel (6)

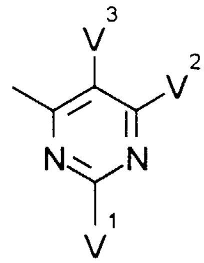

(6)

entsprechen, worin

$V^3$ für H, $CH_3$, F, Cl, Br, $NO_2$, CN, $CONH_2$, $SO_2NH_2$, $CH_3SO_2$, COOH, $COOCH_3$ oder $COOC_2H_5$,

$V^2$ und $V^1$ unabhängig voneinander für H, $CH_3$, F, Cl oder $CH_3SO_2$ stehen,

mit der Maßgabe, daß mindestens einer der Reste $V^1$ oder $V^2$ F oder Cl bedeutet.

6. Reaktivfarbstoffe gemaß Anspruch 1, dadurch gekennzeichnet, daß die Reste

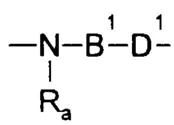 bzw. 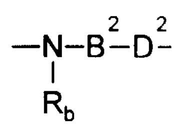

unabhängig voneinander bedeuten:

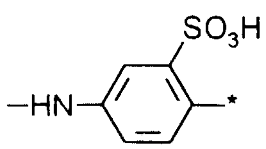 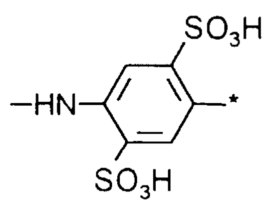 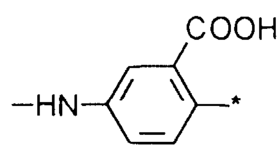

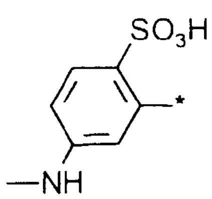 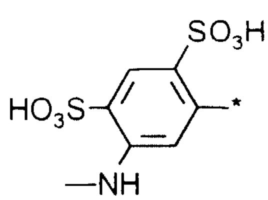 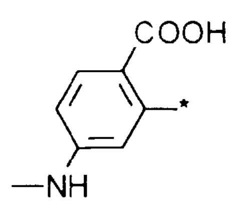

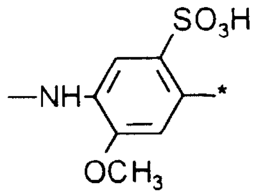
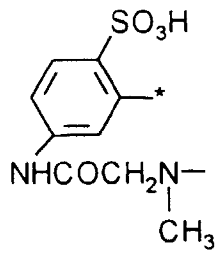
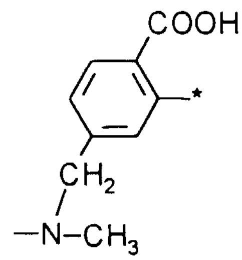

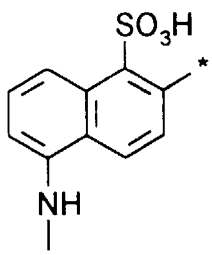
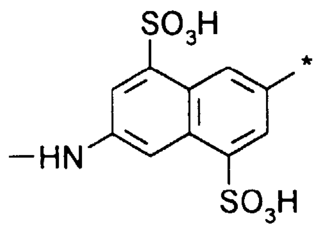
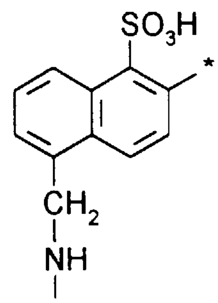

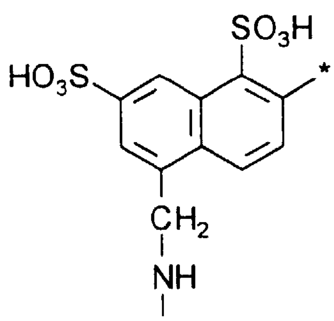
,

wobei die aufgeführten Reste mit der Azogruppe über die mit * markierten Bindungen verknüpft sind.

**7.** Reaktivfarbstoffe gemäß Anspruch 1, dadurch gekennzeichnet, daß der Rest
-X für
$-NH_2$, $-NHCH_3$, $-N(CH_3)_2$, $-NHC_2H_5$, $-N(C_2H_5)_2$,
$-NHCH_2CH_2OH$, $-NHCH_2CH_2OSO_3H$,
$-NHCH_2CH_2SO_3H$, $-NHCH_2COOH$,

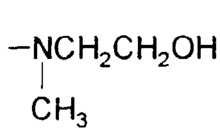 , 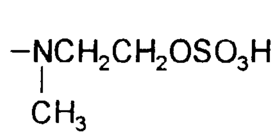 , 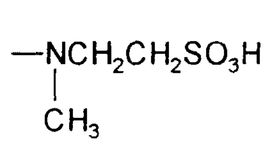

$-N(CH_2CH_2OH)_2$,

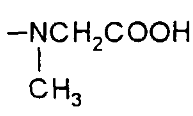 , 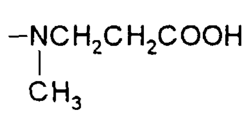 , 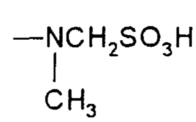 , 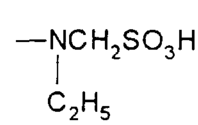 ,

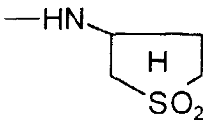 , 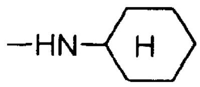 , 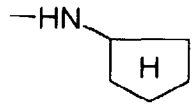 ,

$-NHCH_2CH_2CH_2SO_2CH_2CH_2OSO_3H$, $-NHCH_2CH_2SO_2CH_2CH_2OSO_3H$,

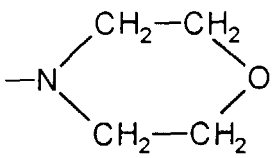 , 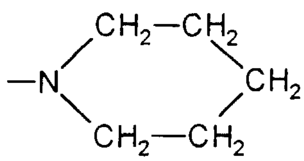 , 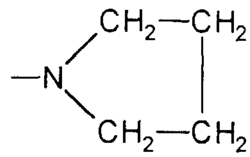 ,

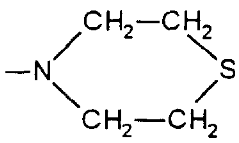 , 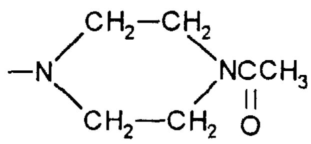 , 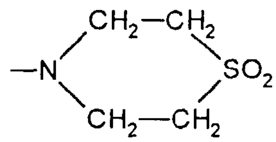 ,

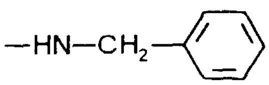 , 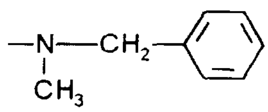 , 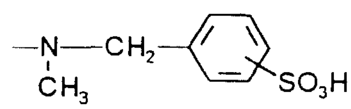 ,

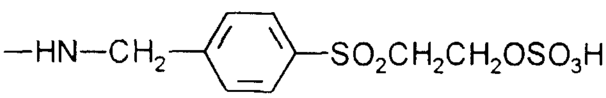 , 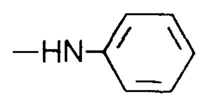 ,

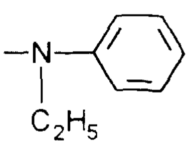 , 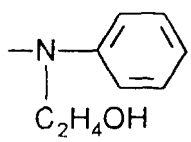 , 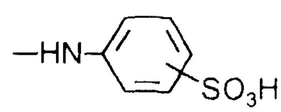

oder

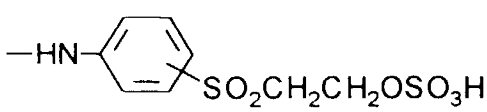

steht.

**8.** Reaktivfarbstoffe gemäß Anspruch 1, worin
$K^1$ und $K^2$ jeweils für

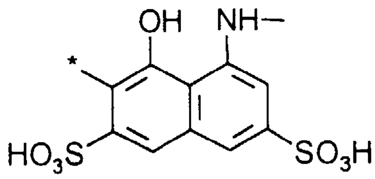

oder

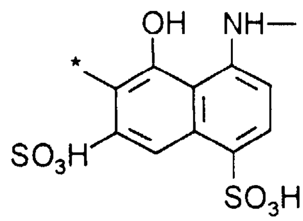

steht, wobei $K^1$ bzw. $K^2$ mit der Azogruppe über die mit * markierte Bindung verknüpft ist und

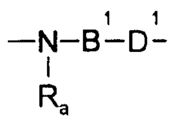

und

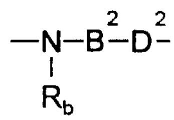

jeweils

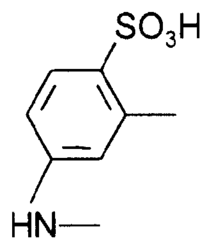

bedeuten und
$Z^1$ und $Z^2$ unabhängig voneinander für

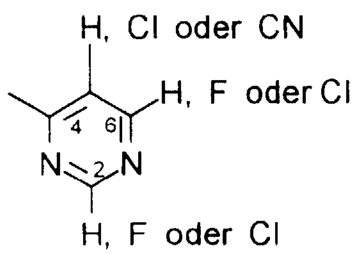

stehen, mit der Maßgabe, daß mindestens einer der Substituenten in 2- oder 6-Stellung für F oder Cl steht, wobei $Z^1$ und $Z^2$ vorzugsweise identisch sind
und

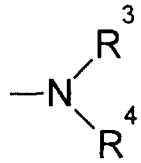

für $NH_2$ steht
oder den Rest einer aliphatischen Aminogruppe bedeutet, vorzugsweise einer aliphatischen Aminogruppe, in der

$R^3$ H, $CH_3$ oder $C_2H_5$ und $R^4$ eine durch COOH, $SO_3H$ oder $OSO_3H$ substituierte $C_1$-$C_4$-Alkylgruppe bedeuten, insbesondere für

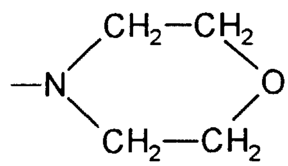

steht.

**9.** Verfahren zur Herstellung von Reaktivfarbstoffen gemäß Anspruch 1, dadurch gekennzeichnet, daß man

a) zwei Mol-Äquivalente eines Amins oder je ein Mol-Äquivalent zweier unterschiedlicher Amine, die der allgemeinen Formel (7a) und/oder (7b) entsprechen

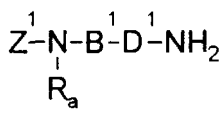

(7a)

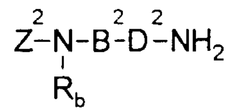

(7b)

in denen $Z^1$, $R_a$, $B^1$ und $D^1$ bzw. $Z^2$, $R_b$, $B^2$ und $D^2$ die angegebene Bedeutung haben, diazotiert und mit einem Mol-Äquivalent einer Kupplungskomponente der Formel (8)

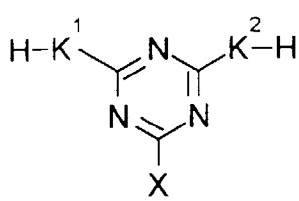

(8)

in der $K^1$, $K^2$ und X die in Anspruch 1 angegebene Bedeutung haben, umsetzt,
oder

b) ein Mol-Äquivalent eines Azofarbstoffs der Formel

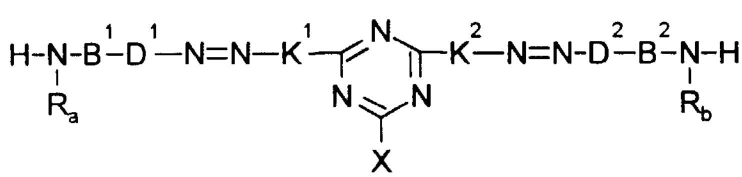

(9)

in dem $R_a$, $R_b$, $B^1$, $B^2$, $D^1$, $D^2$, $K^1$, X und $K^2$ die angegebene Bedeutung haben,
mit zwei Mol-Äquivalenten einer Reaktivkomponente der Formel

$Z^1$-F oder -Cl

oder $Z^2$-F oder -Cl (10)

oder mit je einem Mol-Äquivalent einer unterschiedlichen Reaktivkomponente

$$Z^1\text{-F oder -Cl und } Z^2\text{-F oder -Cl,}$$

worin $Z^1$ und $Z^2$ die angegebene Bedeutung hat,
unter Abspaltung von HF und/oder HCl kondensiert.

**10.** Verfahren zum Färben von hydroxyl- und amidgruppenhaltigem Fasermaterial, dadurch gekennzeichnet, daß man Reaktivfarbstoffe gemäß Anspruch 1 verwendet.

**11.** Hydroxyl- oder amidgruppenhaltiges Fasermaterial, dadurch gekennzeichnet, daß es mit Reaktivfarbstoffen gemäß Anspruch 1 gefärbt wurde.

## Claims

**1.** Reactive dyestuffs having the general formula (1)

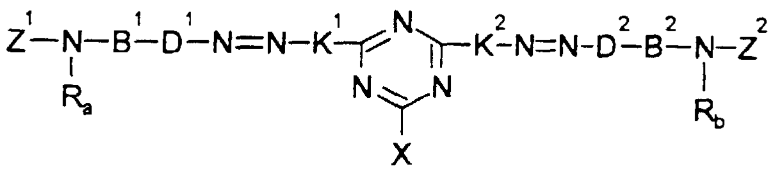

(1),

in which

| | |
|---|---|
| $K^1$ and $K^2$ | denote coupling components which are identical or different, |
| $D^1$ and $D^2$, | independently of one another, represent a substituted or unsubstituted benzene or naphthalene radical, |
| $R_a$ and $R_b$, | independently of one another, denote hydrogen or substituted or unsubstituted $C_1$-$C_4$-alkyl, |
| $B^1$ and $B^2$, | independently of one another, represent a direct bond or a bridging member, |
| $Z^1$ and $Z^2$, | independently of one another, represent a pyrimidine reactive group containing chlorine or fluorine as the leaving group, or represent 2,3-dichloroquinoxaline-6-carboxyl, |
| X | represents $SR^1$, $OR^2$ or |

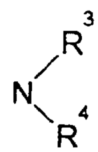

in which,

$R^1$ denotes substituted or unsubstituted $C_1$-$C_4$-alkyl, substituted or unsubstituted phenyl, naphthyl or 2-benzthiazolyl,

$R^2$ represents hydrogen, substituted or unsubstituted $C_1$-$C_4$-alkyl or substituted or unsubstituted phenyl or naphthyl,

$R^3$ represents hydrogen or an aliphatic, cycloaliphatic, heterocyclic or araliphatic radical, and

$R^4$ has the meaning of $R^3$ or represents an aromatic radical, or in which $R^3$ and $R^4$, if desired with the inclusion of a further hetero atom, form a 5- or 6-membered ring.

**2.** Reactive dyestuffs according to Claim 1, characterized in that the coupling components $K^1$ and $K^2$, independently of one another, denote acetoacetsoft arylides, pyrazolones, pyridones and aminonaphthols.

**3.** Reactive dyestuffs according to Claim 1, characterized in that the coupling components $K^1$ and $K^2$, independently of one another, have the formulae (2) to (5)

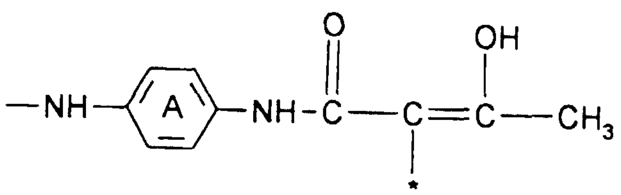

(2)

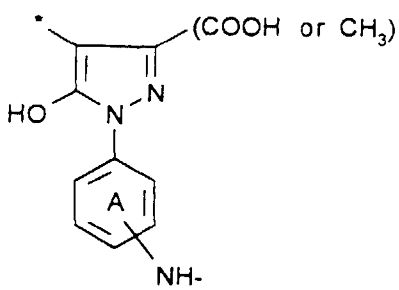

(3)

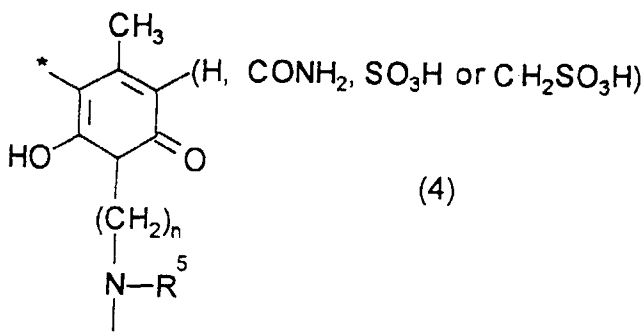

(4)

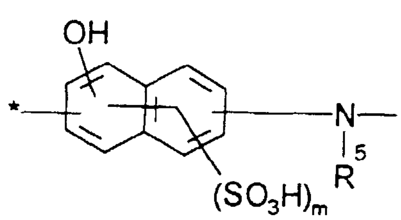

(5),

in which benzene radical A is unsubstituted or substituted by further substituents,

n is an integer from 2 to 6,

m is 1 or 2, and

$R^5$ represents hydrogen, methyl or ethyl,

the bivalent radicals of the formulae (2) to (5) being linked to the triazinyl radical via their amino group and to the azo group of the formula (1) via the bond marked with *

**4.** Reactive dyestuffs according to Claim 1, characterized in that $B^1$ and $B^2$, independently of one another, denote a direct bond, a $C_1$-$C_4$-alkylene, arylene, arylsulphonylamino, arylcarbonylamino or an alkylenecarbonylamino bridge.

**5.** Reactive dyestuffs according to Claim 1, characterized in that $Z^1$ and $Z^2$, independently of one another, have the formula (6)

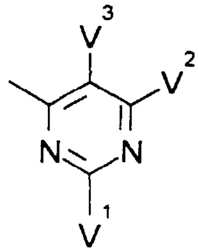

(6)

in which

| | |
|---|---|
| $V^3$ | represents H, $CH_3$, F, Cl, Br, $NO_2$, CN, $CONH_2$, $SO_2NH_2$, $CH_3SO_2$, COOH, $COOCH_3$ or $COOC_2H_5$, |
| $V^2$ and $V^1$, | independently of one another, represent H, $CH_3$, F, Cl or $CH_3SO_2$, |

with the proviso that at least one of the radicals $V^1$ or $V^2$ denotes F or Cl.

**6.** Reactive dyestuffs according to Claim 1, characterized in that the radicals

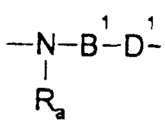 and 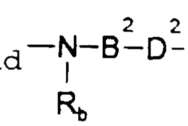

independently of one another,
denote:

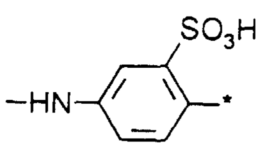 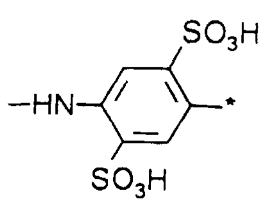 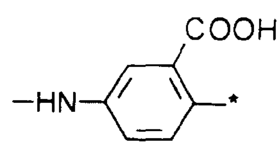

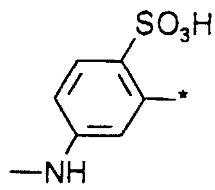
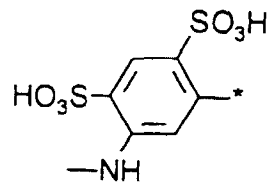
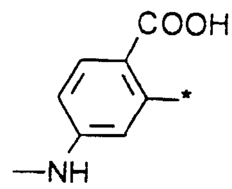

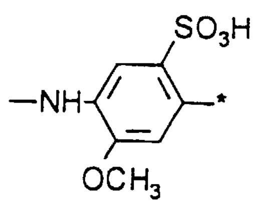
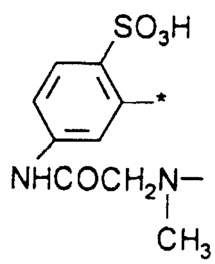
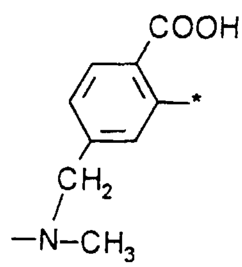

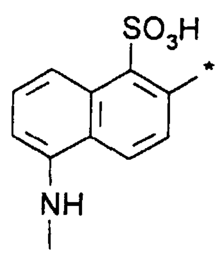
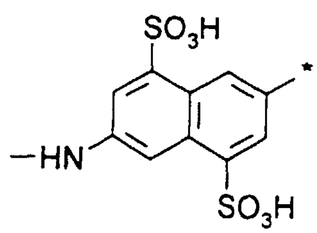
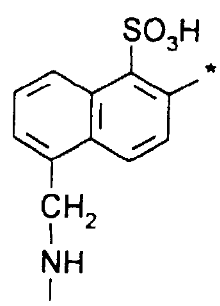

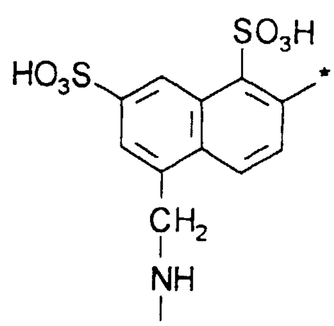
,

the radicals listed being linked to the azo group via the bonds marked with *.

**7.** Reactive dyestuffs according to Claim 1, characterized in that the radical -X represents
$-NH_2$,$-NHCH_3$,$-N(CH_3)_2$,$-NHC_2H_5$ $-N(C_2H_5)_2$,
$-NHCH_2CH_2OH$, $-NHCH_2CH_2OSO_3H$,
$-NHCH_2CH_2SO_3H$, $-NHCH_2COOH$,

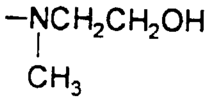, 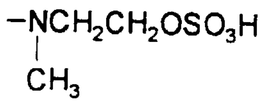, 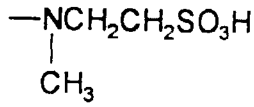,

$-N(CH_2CH_2OH)_2$,

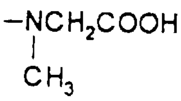, 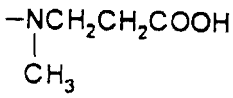, 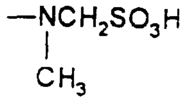, 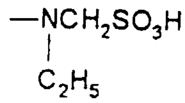,

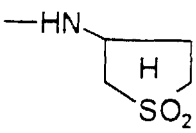, 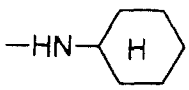, 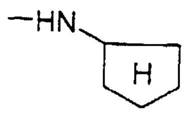,

$-NHCH_2CH_2CH_2SO_2CH_2CH_2OSO_3H$, $-NHCH_2CH_2SO_2CH_2CH_2OSO_3H$,

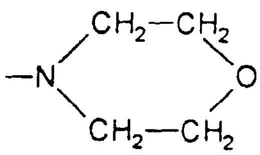, 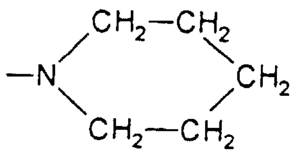, 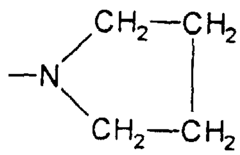,

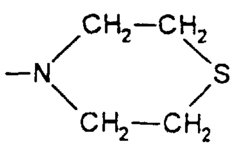, 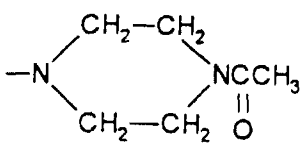, 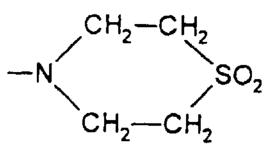,

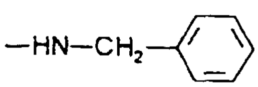, 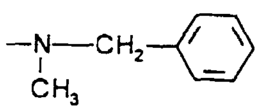, 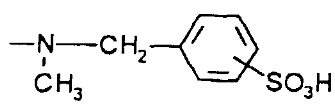,

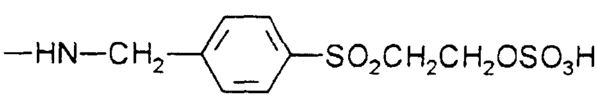, 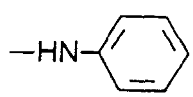,

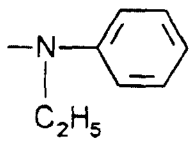 , 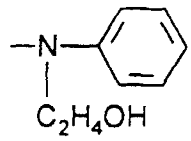 , 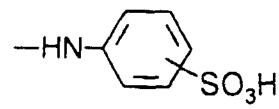

or

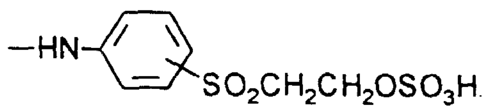

**8.** Reactive dyestuffs according to Claim 1, in which $K^1$ and $K^2$ each represent

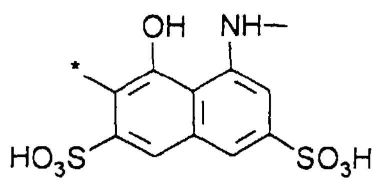 or 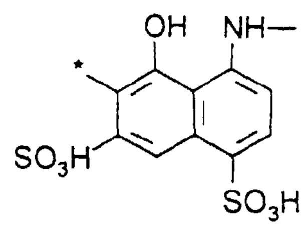

$K^1$ and $K^2$ being linked to the azo group via the bond marked with * , and

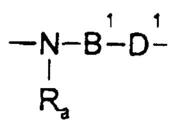 and 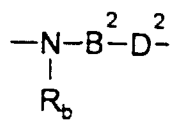

each denote

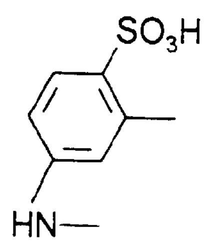 ,

and

$Z^1$ and $Z^2$, independently of one another, represent

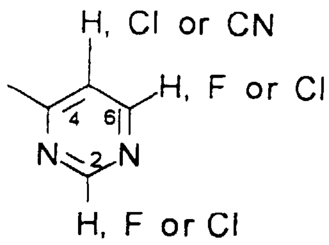

with the proviso that at least one of the substituents in the 2- or 6- position represents F or Cl, $Z^1$ and $Z^2$ being preferably identical,
and

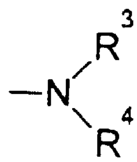

represents $NH_2$
or denotes the radical of an aliphatic amino group, preferably of an aliphatic amino group in which $R^3$ denotes H, $CH_3$ or $C_2H_5$ and $R^4$ denotes a $C_1$-$C_4$-alkyl group substituted by COOH, $SO_3H$ or $OSO_3H$, and represents in particular

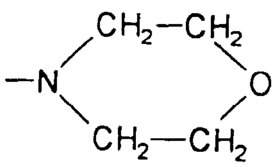

**9.** Process for preparing reactive dyestuffs according to Claim 1, characterized in that

a) two mol equivalents of an amine or one mol equivalent each of two different amines having the general formula (7a) and/or (7b)

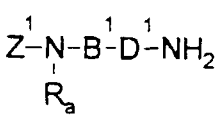

(7a)

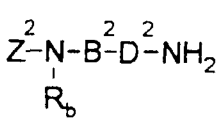

(7b)

in which $Z^1$, $R_a$, $B^1$ and $D^1$ and $Z^2$, $R_b$, $B^2$ and $D^2$ have the meaning given, are diazotized, and the resulting diazonium salt is reacted with one mol equivalent of a coupling component of the formula (8)

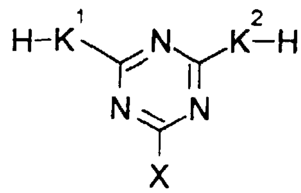

(8)

in which $K^1$, $K^2$ and X have the meaning given in Claim 1, or

b) one mol equivalent of an azo dyestuff of the formula

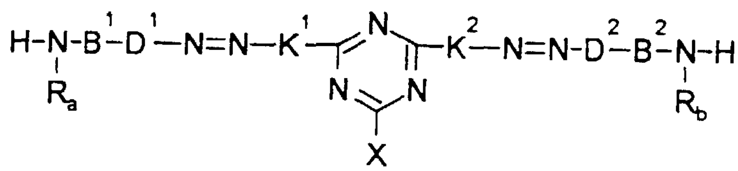

(9)

in which $R_a$, $R_b$, $B^1$, $B^2$, $D^1$, $D^2$, $K^1$, X and $K^2$ have the meaning given, is condensed with two mol equivalents of a reactive component of the formula

$Z^1$-F or -Cl

or $Z^2$-F or -Cl (10)

or with one mol equivalent each of a different reactive component

$Z^1$-F or -Cl and $Z^2$-F or -Cl,

in which $Z^1$ and $Z^2$ have the meaning given, with the elimination of HF and/or HCl.

**10.** Process for dyeing hydroxyl- and amido-containing fibre material, characterized in that reactive dyestuffs according to Claim 1 are used.

**11.** Hydroxyl- or amido-containing fibre material, characterized in that it has been dyed with reactive dyestuffs according to Claim 1.

**Revendications**

**1.** Colorants réactifs répondant à la formule générale 1

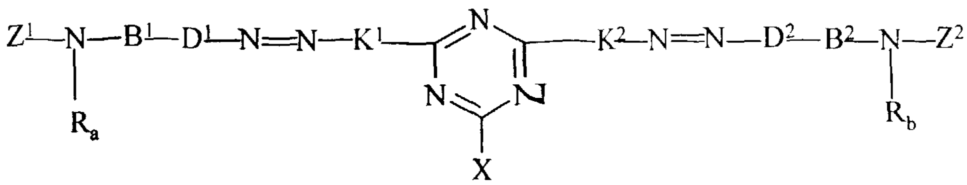

(1),

dans laquelle

| | |
|---|---|
| $K^1$ et $K^2$ | représentent des copulants identiques ou différents, |
| $D^1$ et $D^2$ | représentent chacun, indépendamment l'un de l'autre, un radical benzénique ou naphtalénique éventuellement substitué, |
| $R_a$ et $R_b$ | représentent chacun, indépendamment l'un de l'autre, l'hydrogène ou un groupe alkyle en $C_1$-$C_4$ éventuellement substitué, |
| $B^1$ et $B^2$ | représentent chacun, indépendamment l'un de l'autre, une liaison directe ou un pont, |
| $Z^1$ et $Z^2$ | représentent chacun, indépendamment l'un de l'autre, un groupe réactif pyrimidique dont la partie éliminable consiste en chlore ou fluor, ou un groupe 2,3-dichloroquinoxaline-6-carboxyle, |
| X | représente $SR^1$, $OR^2$ ou |

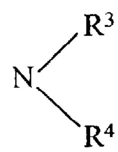

dans lequel

| | |
|---|---|
| $R^1$ | représente un groupe alkyle en $C_1$-$C_4$ éventuellement substitué, un groupe phényle, naphtyle ou 2-benzothiazolyle éventuellement substitué, |
| $R^2$ | représente l'hydrogène, un groupe alkyle en $C_1$-$C_4$ éventuellement substitué ou un groupe phényle ou naphtyle éventuellement substitué, |
| $R^3$ | représente l'hydrogène ou un radical aliphatique, cycloaliphatique, hétérocyclique ou araliphatique et |
| $R^4$ | a l'une des significations de $R^3$ ou représente un radical aromatique, $R^3$ et $R^4$ pouvant également former un cycle à 5 ou 6 chaînons incluant éventuellement un autre hétéroatome. |

**2.** Colorants réactifs selon la revendication 1, caractérisés en ce que les copulants $K^1$ et $K^2$ sont, indépendamment l'un de l'autre, des acétoacétylarylides, des pyrazolones, des pyridones ou des aminonaphtols.

**3.** Colorants réactifs selon la revendication 1, caractérisés en ce que les copulants $K^1$ et $K^2$ répondent, indépendamment l'un de l'autre, aux formules 2 à 5

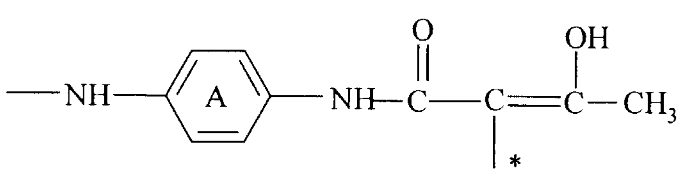

(2)

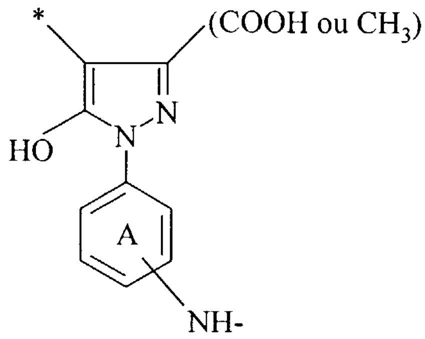

(3)

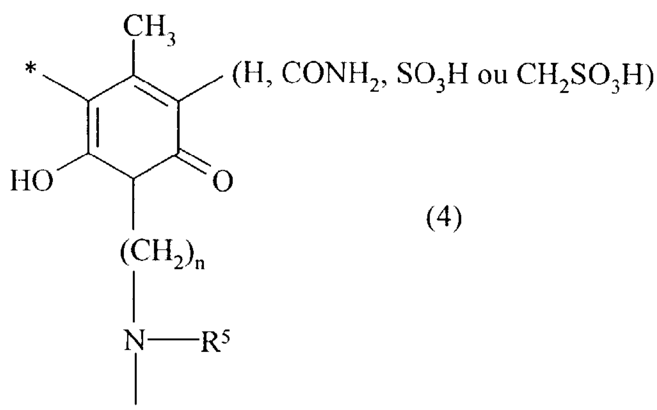

(4)

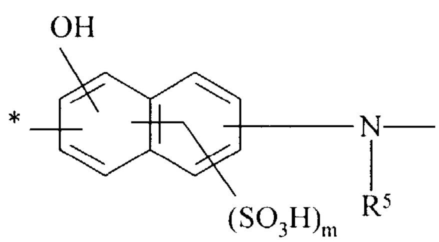

(5),

dans lesquelles le groupe benzénique A peut le cas échéant porter d'autres substituants,

n est un nombre entier allant de 2 à 6,
m est égal à 1 ou 2 et
$R^5$ représente l'hydrogène, un groupe méthyle ou éthyle,

les radicaux bivalents des formules 2 à 5 étant reliés au groupe triazinyle par leur groupe amino et au groupe azo de la formule 1 par la liaison signalée par *.

**4.** Colorants réactifs selon la revendication 1, caractérisés en ce que $B^1$ et $B^2$ représentent chacun, indépendamment l'un de l'autre, une liaison directe, un pont alkylène en $C_1$-$C_4$, arylène, arylsulfonylamino, arylcarbonylamino ou alkylènecarbonylamino.

**5.** Colorants réactifs selon la revendication 1, caractérisés en ce que $Z^1$ et $Z^2$ répondent chacun, indépendamment l'un de l'autre, à la formule 6

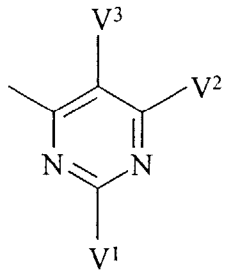

(6),

dans laquelle

$V^3$ représente H, $CH_3$, F, Cl, Br, $NO_2$, CN, $CONH_2$, $SO_2NH_2$, $CH_3SO_2$, COOH, $COOCH_3$ ou $COOC_2H_5$,
$V^2$ et $V^1$ représentent chacun, indépendamment l'un de l'autre, H, $CH_3$, F, Cl ou $CH_3SO_2$,

sous réserve que l'un au moins des symboles $V^1$ ou $V^2$ représente F ou Cl.

**6.** Colorants réactifs selon la revendication 1, caractérisés en ce que les groupes

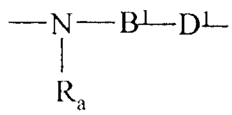 et 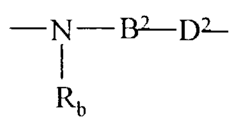

consistent, indépendamment l'un de l'autre, en les groupes suivants :

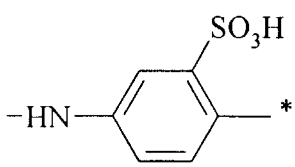
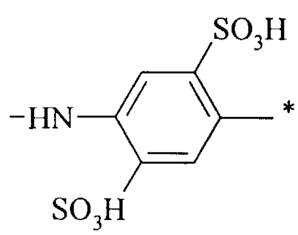
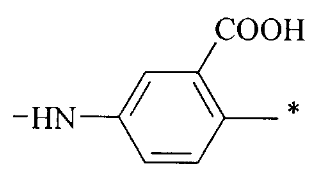

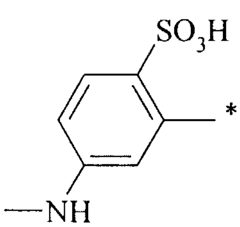
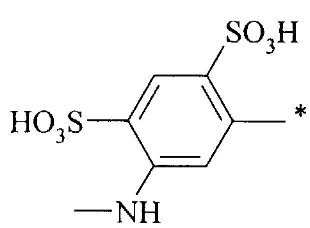
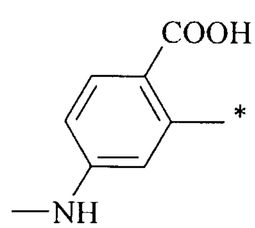

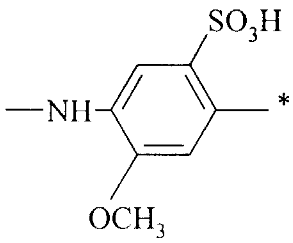
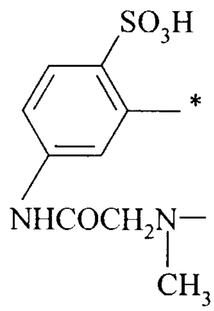
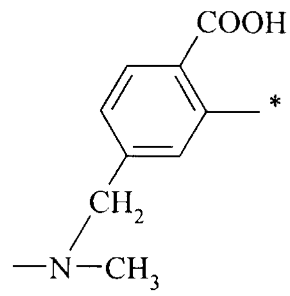

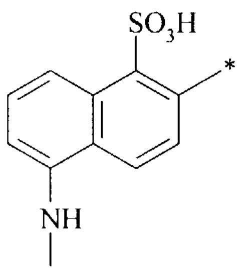
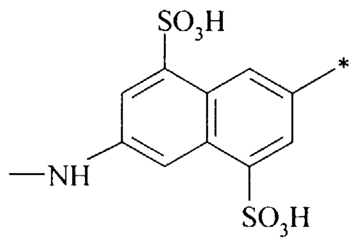
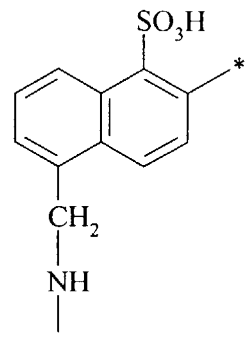

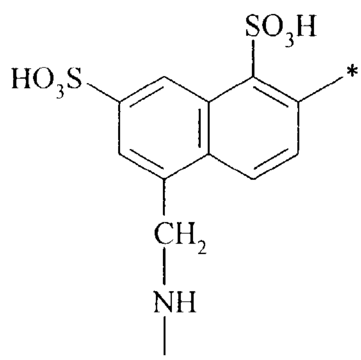

ces groupes étant reliés au groupe azo par les liaisons signalées par *.

**7.** Colorants réactifs selon la revendication 1, caractérisés en ce que -X consiste en $-NH_2$, $-NHCH_3$, $-N(CH_3)_2$, $-NHC_2H_5$, $-N(C_2H_5)_2$, $-NHCH_2CH_2OH$, $-NHCH_2CH_2OSO_3H$, $-NHCH_2CHSO_2SO_3H$, $-NHCH_2COOH$,

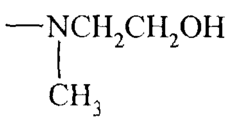 , 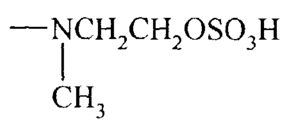 , 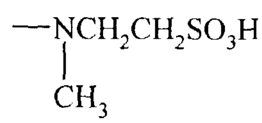 ,

$-N(CH_2CH_2OH)_2$,

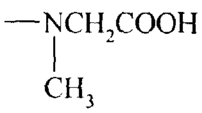 , 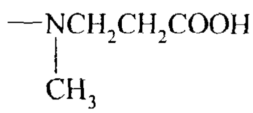 , 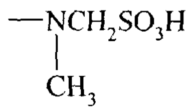 , 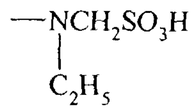 ,

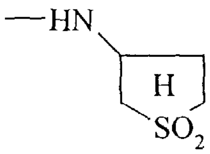 , 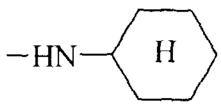 , 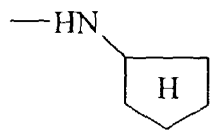 ,

$-NHCH_2CH_2CH_2SO_2CH_2CH_2OSO_3H$, $-NHCH_2CH_2SO_2CH_2CH_2OSO_3H$,

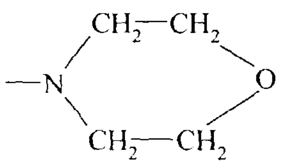 , 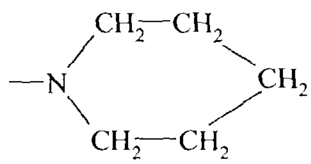 , 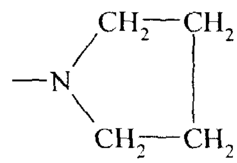 ,

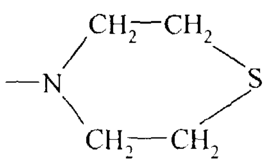 , 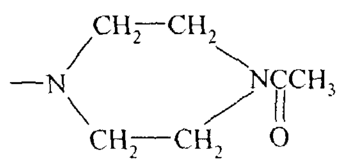 , 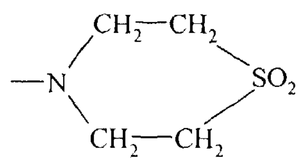 ,

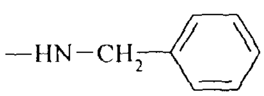 , 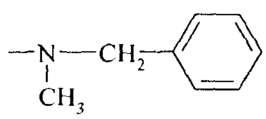 , 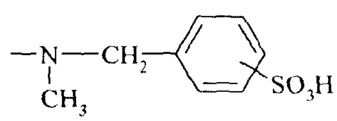 ,

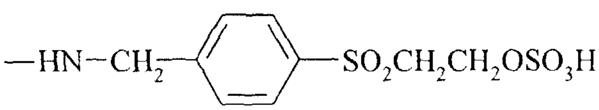 , 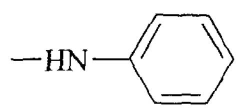 ,

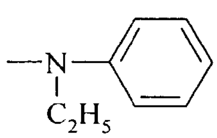 , 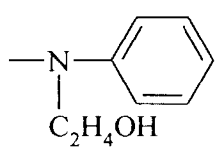 , 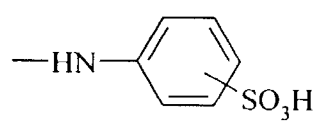 ,

ou

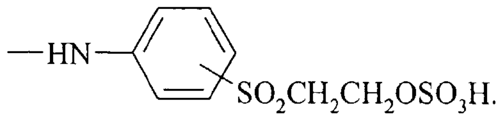

**8.** Colorants réactifs selon la revendication 1, pour lesquels $K^1$ et $K^2$ représentent chacun

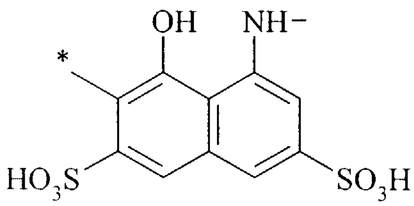

ou

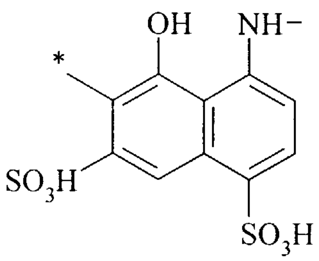

$K^1$ et $K^2$ étant reliés au groupe azo par la liaison signalée par *, et

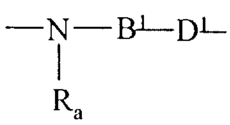

et

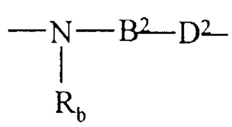

consistent chacun en

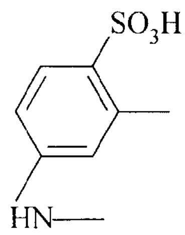

et

$Z^1$ et $Z^2$ représentent chacun, indépendamment l'un de l'autre

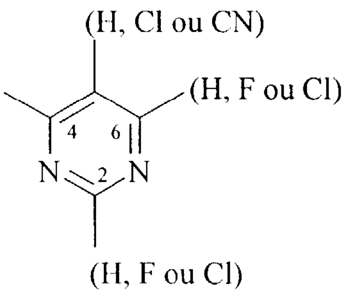

sous réserve que l'un au moins des substituants en position 2 ou 6 représente F ou Cl, $Z^1$ et $Z^2$ étant de préférence identiques,

et

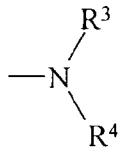

représentent $NH_2$
ou le radical d'un groupe amino aliphatique, de préférence d'un groupe amino aliphatique dans lequel $R^3$ représente H, $CH_3$ ou $C_2H_5$ et $R^4$ un groupe alkyle en $C_1$-$C_4$ substitué par COOH, $SO_3H$ ou $OSO_3H$, en particulier

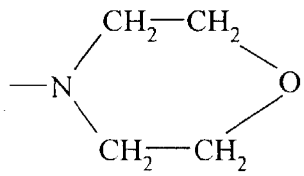

**9.** Procédé de préparation des colorants réactifs selon la revendication 1, caractérisé en ce que

a) on diazote deux équivalents molaires d'une amine ou un équivalent molaire de chacune de deux amines différentes répondant aux formules générales 7a et/ou 7b

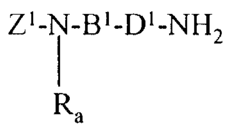

(7a)

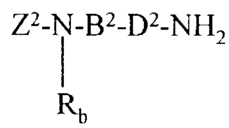

(7b)

dans lesquelles $Z^1$, $R_a$, $B^1$ et $D^1$ et respectivement $Z^2$, $R_b$, $B^2$ et $D^2$ ont les significations déjà indiquées, et on fait réagir avec un équivalent molaire d'un copulant de formule 8

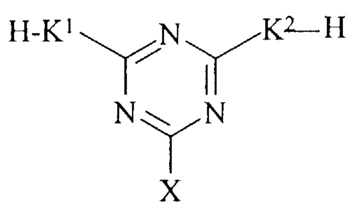

(8)

dans laquelle $K^1$, $K^2$ et X ont les significations indiquées dans la revendication 1, ou bien
b) on condense un équivalent molaire d'un colorant azoïque de formule

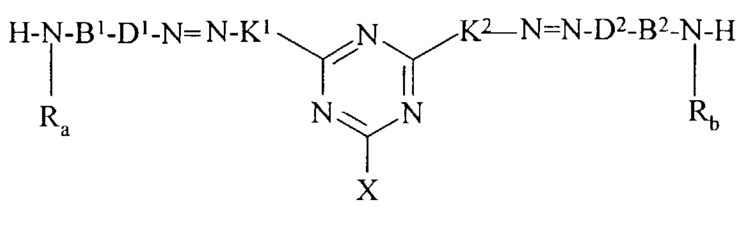

(9),

dans laquelle $R_a$, $Z_b$, $B^1$, $B^2$, $D^1$, $D^2$, $K^1$, X et $K^2$ ont les significations indiquées, avec deux équivalents molaires d'un composant réactif de formule

$$Z^1\text{-F ou -Cl}$$

$$\text{ou } Z^2\text{-F ou -Cl} \qquad 10)$$

ou avec un équivalent molaire de chacun de deux composants réactifs différents,

$$Z^1\text{-F ou -Cl et } Z^2\text{-F ou -Cl}$$

$Z^1$ et $Z^2$ ayant les significations indiquées,
avec scission de HF et/ou d'HCl.

**10.** Procédé pour teindre des matières fibreuses contenant des groupes hydroxy et amide, caractérisé en ce que l'on utilise des colorants réactifs selon la revendication 1.

**11.** Matière fibreuse à groupes hydroxy ou amide, caractérisée en ce qu'elle a été teinte à l'aide de colorants réactifs selon la revendication 1.